# EUROPEAN PATENT APPLICATION

(11) **EP 4 850 906 A1**
(43) Date of publication of application: **09.12.2026**
(21) Application number: 24921982.5
(22) Date of filing: 28.11.2024
(51) Int. Cl.: B32B 27/32, B65D 65/40

(54) **BIAXIALLY ORIENTED POLYPROPYLENE FILM**

(30) Priority: 01.02.2024 JP 2024014403
(71) Applicant: Toyobo Co., Ltd., Kita-ku Osaka-shi, Osaka 530-0001 (JP)
(72) Inventor: HORINOUCHI, Kazuhito, Otsu-shi, Shiga 520-0292 (JP); KIRIYAMA, Kazuya, Inuyama-shi, Aichi 484-8508 (JP); IMAI, Toru, Inuyama-shi, Aichi 484-8508 (JP)
(74) Representative: Vossius & Partner Patentanwälte Rechtsanwälte mbB
(86) International application number: PCT/JP2024/042142
(87) International publication number: WO 2025/164064

(57) **Abstract**

An objective of the present invention is to provide a biaxially oriented polypropylene film having a high loss elastic modulus in a relatively low temperature region. The biaxially oriented polypropylene film according to the present invention is characterized in comprising a base layer A composed of a polypropylene-based resin composition, and a sealant layer B composed of a polypropylene-based resin composition, and satisfying the following (1) and (2): (1) the biaxially oriented polypropylene film comprises the sealant layer B on at least one outermost surface thereof; (2) the minimum value E"(B) of a loss modulus of the biaxially oriented polypropylene film within a temperature range of 25°C to 75°C is 0.16 GPa or more in dynamic viscoelasticity measurement.

## Description

### TECHNICAL FIELD

The present invention relates to a biaxially oriented polypropylene film.

### BACKGROUND ART

Conventionally, a polypropylene-based resin film has been widely used as a heat-sealable film for packaging applications. An example of a heat-sealable polypropylene-based resin film includes a laminated polypropylene-based resin film produced by laminating an unstretched polyethylene-based resin film or an unstretched polypropylene-based resin film with a stretched polypropylene-based resin film. Although such a laminated polypropylene-based resin film exhibits sufficient seal strength, the film is necessarily produced through a laminating step using an organic solvent; therefore, the film is undesirable from both cost and environmental perspectives.

A laminated polypropylene-based resin film is exemplified as another example, produced by stretching a sheet formed by co-extrusion lamination of a layer composed of a high-melting-point polypropylene-based resin and a layer composed of a low-melting-point polyolefin-based resin. For example, Patent documents 1 and 2 disclose a heat-sealable biaxially oriented polypropylene-based resin film having excellent rigidity and transparency.

### PRIOR ART DOCUMENT

### PATENT DOCUMENT

Patent document 1: WO 2021/5893
Patent document 2: WO 2019/244708

### DISCLOSURE OF THE INVENTION

### PROBLEMS TO BE SOLVED BY THE INVENTION

The films disclosed in Patent documents 1 and 2 have a problem in that, when heated, the rigidity and planarity decrease, resulting in poor processability.

An objective of the present invention is to provide a biaxially oriented polypropylene film having a high loss elastic modulus in a relatively low temperature region.

### MEANS FOR SOLVING THE PROBLEMS

The inventors conducted extensive studies to solve the above-described problems. As a result, the inventors completed the present invention by developing a biaxially oriented polypropylene film having a high loss elastic modulus in a relatively low temperature region. The present invention includes the following inventions.
[1] A biaxially oriented polypropylene film,
   comprising a base layer A composed of a polypropylene-based resin composition, and a sealant layer B composed of a polypropylene-based resin composition, and
   satisfying the following (1) and (2):
      (1) the biaxially oriented polypropylene film comprises the sealant layer B on at least one outermost surface thereof;
      (2) the minimum value E"(B) of a loss modulus of the biaxially oriented polypropylene film within a temperature range of 25°C to 75°C is 0.16 GPa or more in dynamic viscoelasticity measurement.
[2] The biaxially oriented polypropylene film according to the above [1], wherein when the biaxially oriented polypropylene film is heated from 30°C to 160°C at a heating rate of 10°C/min in thermomechanical analysis, the length in the width direction becomes 0.9950 × X₀ or less under the temperature of 129°C or higher, wherein X₀ is the length in the width direction at 30°C, the storage modulus in the machine direction at 23°C is 2.0 GPa or more, and the storage modulus in the width direction at 23°C is 7.0 GPa or more.
[3] The biaxially oriented polypropylene film according to the above [1] or [2], wherein the sum of the storage modulus in the machine direction at 23°C and the storage modulus in the machine direction at 140°C is 2.8 GPa or more, and the sum of the storage modulus in the width direction at 23°C and the storage modulus in the width direction at 140°C is 8.5 GPa or more.
[4] The biaxially oriented polypropylene film according to any one of the above [1] to [3], wherein the storage modulus in the machine direction at 120°C is 0.5 GPa or more, and the storage modulus in the width direction at 120°C is 1.5 GPa or more.
[5] The biaxially oriented polypropylene film according to any one of the above [1] to [4], wherein the thermal shrinkage in the machine direction at 120°C is 2.5% or less, and the thermal shrinkage in the width direction at 120°C is 1.1% or less.
[6] The biaxially oriented polypropylene film according to any one of the above [1] to [5], wherein the stress at 5% elongation in the width direction at 23°C is 120 MPa or more.
[7] The biaxially oriented polypropylene film according to any one of the above [1] to [6], wherein Haze is 7.0% or less_{∘}
[8] The biaxially oriented polypropylene film according to any one of the above [1] to [7], comprising 0.2 mass% or more and 2.0 mass% or less of an antifogging agent.
[9] The biaxially oriented polypropylene film according to any one of the above [1] to [8], wherein the base layer A comprises 90 mass% or more of a polypropylene resin having the mesopentad fraction of 97.0% or more.
[10] The biaxially oriented polypropylene film according to any one of the above [1] to [9], wherein the sealant layer B comprises 70 mass% or more of a polypropylene copolymer, and the polypropylene copolymer comprises 4 mol% or more of an α-olefin other than propylene.
[11] The biaxially oriented polypropylene film according to any one of the above [1] to [10], comprising an intermediate layer C composed of a polypropylene-based resin composition between the base layer A and the sealant layer B, wherein the melting point of the polypropylene-based resin composition constituting the intermediate layer C is higher than that of the polypropylene-based resin composition constituting the sealant layer B.
[12] The biaxially oriented polypropylene film according to any one of the above [1] to [11], wherein the thickness is 10 µm or more and 100 µm or less.

### EFFECT OF THE INVENTION

The polypropylene film of the present invention is a heat-sealable film having excellent rigidity and heat resistance, and therefore can readily maintain a bag shape when formed into a packaging bag. In addition, the polypropylene film can be suitably used in applications requiring high rigidity even without laminating a sealant film. Even when the film thickness is reduced, the film can maintain the strength thereof. In addition, since the polypropylene film is excellent in heat resistance, the polypropylene film produces fewer wrinkles in the sealed portion during heat sealing, resulting in an excellent appearance when formed into a bag.

### BRIEF DESCRIPTION OF THE DRAWINGS

[Figure 1] Figure 1 is a graph showing the relationship between the temperature and the length in the width direction of the films of Example 1 according to the present invention and Comparative Examples 1 and 4.
[Figure 2] Figure 2 is a graph showing the relationship between the temperature and the loss modulus in Example 1 according to the present invention and Comparative Example 1.
[Figure 3] Figure 3 is a graph showing the relationship between the temperature and the storage modulus in Example 1 according to the present invention and Comparative Example 1.

### MODE FOR CARRYING OUT THE INVENTION

Hereinafter, the biaxially oriented polypropylene film of the present invention is described.

### Layer structure of biaxially oriented polypropylene film

The biaxially oriented polypropylene film of the present invention comprises a base layer A composed of a polypropylene-based resin composition, and a sealant layer B composed of a polypropylene-based resin composition. The biaxially oriented polypropylene film of the present invention may further comprise an intermediate layer C composed of a polypropylene-based resin composition between the base layer A and the sealant layer B. Furthermore, the biaxially oriented polypropylene film of the present invention may also comprise a functional layer D.

The base layer A, sealant layer B, intermediate layer C and functional layer D are described in detail below.

### 1. Base layer A

The base layer A composed of a polypropylene-based resin composition is preferably composed of a polypropylene-based resin composition comprising a polypropylene homopolymer as a main component. The term "main component" means that a polypropylene homopolymer accounts for 80 mass% or more of the entire base layer A; more preferably accounts for 90 mass% or more of the entire base layer A; even more preferably accounts for 95 mass% or more of the entire base layer A; particularly preferably accounts for 97 mass% or more of the entire base layer A; and the most preferably accounts for 99 mass% or more of the entire base layer A. The upper limit of the proportion is not particularly restricted, and more preferably a polypropylene homopolymer accounts for 100 mass% or less of the entire base layer A.

### 1-1. Polypropylene homopolymer

The polypropylene homopolymer used in the base layer A means a polypropylene polymer that substantially does not contain an α-olefin component other than propylene. Specifically, the polypropylene homopolymer is either a propylene homopolymer consisting of 100 mol% propylene, or a polypropylene copolymer composed of more than 0 mol% and 1 mol% or less of an α-olefin component other than propylene and 99 mol% or more and less than 100 mol% of propylene (total: 100 mol%). The α-olefin component other than propylene is ethylene and an α-olefin having 4 or more carbon atoms. Even when an α-olefin component other than propylene is contained, the content amount thereof is 1 mol% or less as described above, preferably 0.3 mol% or less, more preferably 0.2 mol% or less, and even more preferably 0.1 mol% or less. When the content amount is within the above range, crystallinity tends to be improved.

An example of the α-olefin component having 4 or more carbon atoms includes 1-butene, 1-pentene, 3-methyl-1-pentene, 3-methyl-1-butene, 1-hexene, 4-methyl-1-pentene, 5-ethyl-1-hexene, 1-octene, 1-decene, 1-dodecene, 1-tetradecene, 1-hexadecene, 1-heptadecene, 1-octadecene and 1-eicosene.

The polypropylene homopolymer may be a combination of two or more different polypropylene homopolymers, and the total content amount is preferably included within the above-described range in such a case. It should be noted that the polypropylene homopolymer used in the base layer A includes not only a polypropylene homopolymer containing no α-olefin component other than propylene but also a polypropylene copolymer composed of more than 0 mol% and 1 mol% or less of an α-olefin component other than propylene and 99 mol% or more and less than 100 mol% of propylene.

Preferred physical properties of the polypropylene homopolymer are described below. When two or more different polypropylene homopolymers are used, the physical property value is taken as mass-weighted average value of the respective polypropylene homopolymer properties.

The melting point Tmₐ of the polypropylene homopolymer used in the base layer A is preferably 160°C or higher and 170°C or lower. When Tmₐ is 160°C or higher, rigidity and heat resistance at elevated temperature can be more readily achieved. When Tmₐ is 170°C or lower, an increase in production cost of polypropylene may be suppressed, and film breakage during film formation may be reduced. The Tmₐ is more preferably 161°C or higher, even more preferably 162°C or higher, and more preferably 169°C or lower, even more preferably 168°C or lower, particularly preferably 167°C or lower, most preferably 166°C or lower. The Tmₐ can be further increased by incorporating a nucleating agent into the aforementioned polypropylene resin.

The melting point of the resin is defined as the main peak temperature of the endothermic peak associated with melting, as observed when 5 mg of the polypropylene homopolymer is charged in an aluminum pan and set in a differential scanning calorimeter (DSC), heated from 30°C to 230°C at a heating rate of 20°C/min under a nitrogen atmosphere and held at 230°C for 5 minutes to melt the polypropylene homopolymer, and then cooled to 30°C at a cooling rate of -10°C/min and held at 30°C for 5 minutes, followed by reheating at a heating rate of 10°C/min.

The polypropylene homopolymer used in the base layer A preferably has a mesopentad fraction ([mmmm]%), which is an index of stereoregularity, of 97.0% or more and 99.9% or less. When the mesopentad fraction is 97.0% or more, the crystallinity of the polypropylene resin is increased, and the rigidity and the heat resistance at high temperature may be improved due to increased melting point of the crystal (Tmₐ), crystallinity degree and crystal orientation degree in the base layer A. When the mesopentad fraction is 99.9% or less, it becomes easier to suppress the production cost of polypropylene and to prevent breakage during film formation. The mesopentad fraction is more preferably 97.5% or more, even more preferably 98.0% or more, and more preferably 99.7% or less, even more preferably 99.5% or less. The mesopentad fraction is measured by nuclear magnetic resonance (so-called NMR). In order to set the mesopentad fraction of the polypropylene homopolymer within the above range, preferred methods include washing the obtained polypropylene polymer powder with a solvent such as n-heptane, appropriately selecting the catalyst and/or the cocatalyst, and appropriately selecting the component of the polypropylene-based resin composition.

The melt flow rate (MFR) of the polypropylene homopolymer used in the base layer A is preferably 5.0 g/10 min or more and 30 g/10 min or less, as measured at a temperature of 230°C under a load of 2.16 kgf in accordance with Condition M of JIS K 7210 (1995).

When the MFR of the polypropylene resin is 5.0 g/10 min or more, the proportion of a low molecular weight component in the polypropylene resin constituting the base layer A increases; as a result, the orientation-induced crystallization of the polypropylene resin may be further promoted by employing a width direction stretching step in the film-forming process described later, and not only the crystallinity degree in the base layer A is more readily increased but also the entanglement among polypropylene molecular chains in the amorphous region is reduced, and thus the heat resistance may be further enhanced. When the MFR of the polypropylene resin is 30 g/10 min or less, good film-formability may be readily maintained.

The MFR is more preferably 5.5 g/10 min or more, even more preferably 6.0 g/10 min or more, particularly preferably 6.3 g/10 min or more, most preferably 6.5 g/10 min or more, and more preferably 25 g/10 min or less, even more preferably 22 g/10 min or less, particularly preferably 20 g/10 min or less, most preferably 10 g/10 min or less.

In order to adjust the MFR of the polypropylene homopolymer within the above range, it is preferred to employ a method such as controlling the molecular weight and molecular weight distribution of the polypropylene homopolymer.

The polypropylene homopolymer used in the base layer A preferably has a lower limit of the M_{w}/Mₙ, which is an indicator of molecular weight distribution, of 3.5, more preferably 4.0, even more preferably 4.5, and particularly preferably 5.0. The upper limit of M_{w}/Mₙ is preferably 30, more preferably 25, even more preferably 23, particularly preferably 21, and most preferably 20.

When M_{w}/Mₙ is included in the above range, it is easy to increase the amount of the components having a molecular weight of 100,000 or less. The M_{w}/Mₙ can be determined using gel permeation chromatography (GPC).

The molecular weight distribution of the polypropylene polymer can be adjusted by polymerizing components having different molecular weights in multiple stages in a series of plants, blending components having different molecular weights offline using a kneader, polymerizing a blend of catalysts having different performances, or using a catalyst capable of achieving a desired molecular weight distribution. The molecular weight distribution obtained by GPC may be a smooth distribution having a single peak, or may be a distribution having multiple peaks or shoulders, in a GPC chart in which the horizontal axis represents the logarithm of molecular weight M (log M) and the vertical axis represents the differential distribution value (mass fraction per log M).

The amount of the component having a molecular weight of 100,000 or less in the GPC cumulative curve of the propylene-based resin composition constituting the base layer A is preferably 38 mass% or more, and more preferably 38 mass% or more and 65 mass% or less. When the amount of the component having a molecular weight of 100,000 or less is 38 mass% or more, heat resistance can be more readily improved. When the amount of the component having a molecular weight of 100,000 or less is 65 mass% or less, a decrease in film strength is less likely to occur. In this case, when a high molecular weight component or a long-chain branched component having long relaxation times are included, it becomes easier to adjust the amount of the component having a molecular weight of 100,000 or less in the polypropylene resin without significantly changing the overall viscosity, thereby facilitating improvement in film-formability without significantly affecting rigidity and heat resistance. The amount is even more preferably 40 mass% or more, particularly preferably 41 mass% or more, most preferably 42 mass% or more, and even more preferably 60 mass% or less, particularly preferably 55 mass% or less, most preferably 50 mass% or less.

### 1-2. Antifogging agent

The polypropylene-based resin composition constituting the base layer A preferably comprises an antifogging agent. The biaxially oriented polypropylene film of the present invention can be processed into a packaging bag; particularly when fresh produce is placed in the packaging bag, the addition of an antifogging agent can prevent fogging that would otherwise occur in the packaging bag due to the continued physiological activity of the produce after harvest.

A known antifogging agent can be used as the antifogging agent, such as an ethylene oxide adduct of an aliphatic amine, an ethylene oxide adduct of an aliphatic amide, an ester of an ethylene oxide adduct of an aliphatic amine with a fatty acid, a fatty acid ester of a polyol, a fatty acid amine, and a fatty acid amide. In particular, it is preferred to comprise at least one selected from the group consisting of an ethylene oxide adduct of an aliphatic amine and an ester of an ethylene oxide adduct of an aliphatic amine with a fatty acid, and it is more preferred to comprise both of an ethylene oxide adduct of an aliphatic amine and an ester of an ethylene oxide adduct of an aliphatic amine with a fatty acid.

A preferred example of an ester of an ethylene oxide adduct of an aliphatic amine with a fatty acid includes at least one selected from the group consisting of stearyl diethanolamine monoester and stearyl diethanolamine diester. Since a packaging bag is more often stored at ambient temperature rather than under frozen conditions, it is preferred to use an antifogging agent that continuously exhibits an antifogging property during repeated temperature changes in the range of 5°C to 30°C in terms of the temperature fluctuations during storage or distribution in order to maintain an excellent antifogging property over a long period during distribution; however, the antifogging agent is not restricted to the above preferred embodiments and may be appropriately selected depending on the intended use. The antifogging agent may be used alone or in combination of two or more types.

An example of the stearyl diethanolamine monoester includes stearyl diethanolamine monolaurate, stearyl diethanolamine monomyristate, stearyl diethanolamine monopalmitate, stearyl diethanolamine monostearate and stearyl diethanolamine monooleate. In particular, stearyl diethanolamine monostearate is preferred.

An example of the stearyl diethanolamine diester includes stearyl diethanolamine dilaurate, stearyl diethanolamine dimyristate, stearyl diethanolamine dipalmitate, stearyl diethanolamine distearate and stearyl diethanolamine dioleate. In particular, stearyl diethanolamine distearate is preferred.

An example of the ethylene oxide adduct of an aliphatic amine includes lauryl diethanolamine, myristyl diethanolamine, palmityl diethanolamine and stearyl diethanolamine, and stearyl diethanolamine is preferred. The ethylene oxide adduct of an aliphatic amine may be used alone or in combination of two or more types.

An amount of the antifogging agent in the propylene-based resin composition constituting the base layer A is preferably 0.2 mass% or more and 2.0 mass% or less. The amount is more preferably 0.3 mass% or more, even more preferably 0.35 mass% or more, and more preferably 1.8 mass% or less, even more preferably 1.6 mass% or less. It should be noted that the antifogging agent may migrate from the base layer A to other layers such as the intermediate layer C during the film-forming process as described later.

### 1-3. Other matters

The polypropylene-based resin composition constituting the base layer A may further contain the other resin in addition to the polypropylene homopolymer and a known additive, such as a heat stabilizer, an antioxidant, a ultraviolet absorber, a nucleating agent, a tackifier, a flame retardant and an inorganic or organic filler, to the extent that the effect of the present invention is not impaired.

It is preferred that the additive is present only in a small amount. The amount of a resin other than the polypropylene homopolymer in the polypropylene-based resin composition constituting the base layer A is preferably 20 mass% or less, more preferably 10 mass% or less, even more preferably 5 mass% or less, particularly preferably 2 mass% or less, and most preferably 1 mass% or less. The amount of an additive other than a resin in the polypropylene-based resin composition constituting the base layer A is preferably 10 mass% or less, more preferably 5 mass% or less, even more preferably 2 mass% or less and particularly preferably 1 mass% or less. The resin other than the polypropylene homopolymer and/or the additive other than a resin may not be blended into the base layer A. In other words, the amount of the resin other than the polypropylene homopolymer and/or the additive other than a resin in the base layer A may be 0 mass% or more.

An example of a resin other than the polypropylene homopolymer includes a polyolefin resin other than the polypropylene homopolymer used in the base layer A, and various elastomers. The resins may be produced by sequential polymerization using multi-stage reactors, blended with the polypropylene resin using a Henschel mixer, diluted with polypropylene to a predetermined concentration using a master batch previously prepared with a melt-kneading machine, or used after melt-kneading the entire amount in advance. When the polypropylene homopolymer is used alone in the base layer A and thus the surface resistivity is excessively high, a surfactant may be added to reduce the surface resistivity.

### 2. Sealant layer B

### 2-1. Polypropylene-based resin composition

The sealant layer B composed of a polypropylene-based resin composition preferably comprises a polypropylene copolymer containing an α-olefin other than propylene. In other words, the polypropylene-based resin composition constituting the sealant layer B preferably comprises a polypropylene copolymer containing an α-olefin other than propylene. Even when simply referring to a "polypropylene copolymer (contained in the sealant layer B)" in the description of the sealant layer B, the words means a polypropylene copolymer containing an α-olefin other than propylene in addition to propylene. The sealant layer B preferably contains 70 mass% or more of the polypropylene copolymer. When the content amount of the polypropylene copolymer is 70 mass% or more, the interlayer adhesion between the sealant layer B and the intermediate layer C can be readily improved, and the heat-seal strength of the biaxially oriented polypropylene film can be further enhanced. The content amount is more preferably 80 mass% or more, even more preferably 90 mass% or more, and particularly preferably 95 mass% or more. The polypropylene copolymer contained in the sealant layer B may be a combination of two or more different polypropylene copolymers, and the total content amount is preferably included in the above range. The upper limit of the proportion is not particularly restricted, and the polypropylene copolymer may be present in an amount of 100 mass% or less of the sealant layer B.

The content amount of the α-olefin component other than propylene in the polypropylene copolymer contained in the sealant layer B is preferably 4.0 mol% or more. In this case, the content amount of propylene in the polypropylene copolymer is 96 mol% or less, and the total content amount of the propylene and the α-olefin component other than propylene is 100 mol%. The content amount of the α-olefin component refers to the total amount of ethylene and α-olefins having 4 or more carbon atoms. The content amount of the α-olefin component other than propylene is more preferably 5.0 mol% or more, even more preferably 6.0 mol% or more, particularly preferably 7.0 mol% or more, and more preferably 15 mol% or less, even more preferably 12 mol% or less, particularly preferably 10 mol% or less.

An example of the α-olefin component having 4 or more carbon atoms includes 1-butene, 1-pentene, 3-methyl-1-pentene, 3-methyl-1-butene, 1-hexene, 4-methyl-1-pentene, 5-ethyl-1-hexene, 1-octene, 1-decene, 1-dodecene, 1-tetradecene, 1-hexadecene, 1-heptadecene, 1-octadecene and 1-eicosene.

The α-olefin component other than propylene is preferably an α-olefin component other than propylene having 2 or more and 20 or less of carbon atoms, more preferably an α-olefin component other than propylene having 2 or more and 10 or less of carbon atoms, even more preferably an α-olefin component other than propylene having 2 or more and 6 or less of carbon atoms, and particularly preferably an α-olefin component other than propylene having 2 or more and 4 or less of carbon atoms.

The melting point Tm_{b} of the polypropylene-based resin composition constituting the sealant layer B is preferably 150°C or lower, more preferably 145°C or lower, even more preferably 140°C or lower, particularly preferably 135°C or lower, and most preferably 130°C or lower. It is possible to easily lower the heat-seal initiation temperature while increasing the heat-seal strength by adjusting Tm_{b} to the above range. The lower limit of the melting point Tm_{b} of the polypropylene-based resin composition constituting the sealant layer B is not particularly restricted. For example, the melting point Tm_{b} may be 110°C or higher. The melting point Tm_{b} of the polypropylene-based resin composition constituting the sealant layer B is preferably lower than the melting point Tm_{c} of the polypropylene-based resin composition constituting the intermediate layer C from the viewpoint of improving heat-seal strength.

The melt flow rate (MFR) of the polypropylene-based resin composition constituting the sealant layer B, as measured at a temperature of 230°C under a load of 2.16 kgf, is preferably 5.0 g/10 min or more and 8.0 g/10 min or less. The MFR is more preferably 5.5 g/10 min or more, even more preferably 6.0 g/10 min or more, particularly preferably 6.3 g/10 min or more, and more preferably 7.5 g/10 min or less, even more preferably 7.0 g/10 min or less, particularly preferably 6.8 g/10 min or less. The melt flow rate of the polypropylene-based resin composition constituting the sealant layer B is preferably higher than that of the polypropylene-based resin composition constituting the intermediate layer C from the viewpoint of improving heat-seal strength.

An example of the polypropylene copolymer contained in the sealant layer B preferably includes at least one selected from the group consisting of a propylene-butene copolymer, a propylene-ethylene-butene copolymer and a propylene-ethylene copolymer, and more preferably includes a propylene-butene copolymer.

### 2-2. Propylene-ethylene-butene copolymer

The content amount of an α-olefin component other than propylene in the propylene-ethylene-butene copolymer is preferably 4 mol% or more. When the content amount of an α-olefin component other than propylene is 4 mol% or more, the interlayer adhesion between the intermediate layer C and the sealant layer B tends to be improved, and as a result, the heat-seal strength and sealing performance also tend to be improved. The content amount of an α-olefin component other than propylene is more preferably 5 mol% or more and even more preferably 6 mol% or more. The upper limit of the content amount of an α-olefin component other than propylene is not particularly restricted. For example, the content amount may be 25 mol% or less. When two or more α-olefin components other than propylene are used, the total amount thereof is defined as the content amount of α-olefin components other than propylene.

The content amount of ethylene is preferably 1 mol% or more and more preferably 2 mol% or more. The upper limit of the ethylene content amount is not particularly restricted. For example, the ethylene content amount may be 12 mol% or less, since the film surface may become tacky, resulting in deterioration of slipperiness and antiblocking property, in the case where the ethylene content amount is excessively high.

The butene content amount is preferably 1 mol% or more and more preferably 2 mol% or more. The upper limit of the butene content amount is not particularly restricted. For example, the butene content amount may be 16 mol% or less, since the film surface may become tacky, resulting in deterioration of slipperiness and antiblocking property in the case where the butene content amount is excessively high.

As the propylene-ethylene-butene copolymer having a total content amount of an α-olefin component other than propylene of 4 mol% or more, a commercially available product may be used, such as FSX66E8 manufactured by Sumitomo Chemical.

### 2-3. Propylene-butene copolymer

The content amount of butene in the propylene-butene copolymer is preferably 4 mol% or more. When the butene content amount is 4 mol% or more, the interlayer adhesion between the intermediate layer C and the sealant layer B tends to be improved, and as a result, the heat-seal strength and the sealing performance tend to be improved. The butene content amount is more preferably 5 mol% or more and even more preferably 6 mol% or more. The upper limit of the butene content amount is not particularly restricted. For example, the butene content amount may be adjusted to 16 mol% or less and preferably 12 mol% or less, since the film surface may become tacky and thus the slip properties and the antiblocking property may be deteriorated in the case where the butene content amount is excessively high. As the propylene-butene copolymer having a butene content amount of 4 mol% or more, a commercially available product may be used. An example thereof includes SP7843 manufactured by Sumitomo Chemical, SPX78J1 manufactured by Sumitomo Chemical and XR110H manufactured by Mitsui Chemicals.

### 2-4. Propylene-ethylene copolymer

The content amount of ethylene in the propylene-ethylene copolymer is preferably 4 mol% or more. When the ethylene content amount is 4 mol% or more, the interlayer adhesion between the intermediate layer C and the sealant layer B tends to be improved, and as a result, the heat-seal strength and the sealing performance tend to be improved. The ethylene content amount is more preferably 5 mol% or more and even more preferably 6 mol% or more. The upper limit of the ethylene content amount is not particularly restricted. For example, the ethylene content amount may be adjusted to 12 mol% or less, since the film surface may become tacky and thus the slip properties and the antiblocking property may be deteriorated in the case where the ethylene content amount is excessively high. As the propylene-ethylene copolymer having an ethylene content amount of 4 mol% or more, a commercially available product may be used. An example thereof includes PC540R manufactured by SunAllomer and VM3588FL manufactured by Mitsui Chemicals.

### 2-5. Antifogging agent

The polypropylene-based resin composition constituting the sealant layer B may or may not contain an antifogging agent. As the antifogging agent, the antifogging agents described in the explanation of the base layer A may be used. Even when the polypropylene-based resin composition constituting the sealant layer B does not contain an antifogging agent, an antifogging agent may migrate from the base layer A to the sealant layer B during the film-forming process and thus the resulting biaxially oriented polypropylene film may contain the antifogging agent in the sealant layer B.

As long as the effects of the present invention are not impaired, the polypropylene-based resin composition constituting the sealant layer B may contain a resin other than the polypropylene copolymer and an additive such as the above-described antifogging agent, a known heat stabilizer, an antioxidant, a ultraviolet absorber, a nucleating agent, a tackifier, a flame retardant and an inorganic or organic filler. An example of a resin other than the polypropylene copolymer includes a polyolefin resin other than the polypropylene copolymer used in the sealant layer B, and various elastomers. The amount of the resin and additive is preferably small. The amount of the resin other than the polypropylene copolymer in the polypropylene-based resin composition constituting the sealant layer B is preferably 30 mass% or less, more preferably 10 mass% or less, even more preferably 5 mass% or less, particularly preferably 2 mass% or less, and may be 0 mass% or more. The amount of an additive other than a resin in the polypropylene-based resin composition constituting the sealant layer B is preferably 10 mass% or less, more preferably 5 mass% or less, even more preferably 2 mass% or less, particularly preferably 1 mass% or less, and may be 0 mass% or more.

### 3. Intermediate layer C

### 3-1. Polypropylene-based resin composition

The intermediate layer C composed of a polypropylene-based resin composition preferably comprises a polypropylene copolymer containing an α-olefin other than propylene. In other words, the polypropylene-based resin composition constituting the intermediate layer C preferably comprises a polypropylene copolymer containing an α-olefin other than propylene. The heat-seal strength can be improved by providing the intermediate layer C. Even when the term "polypropylene copolymer" is simply used in the description of the intermediate layer C, the term refers to a polypropylene copolymer containing an α-olefin other than propylene. The intermediate layer C preferably contains 70 mass% or more of the polypropylene copolymer. When the content amount of the polypropylene copolymer is 70 mass% or more, the interlayer adhesion between the intermediate layer C and the sealant layer B and the interlayer adhesion between the base layer A and the intermediate layer C can be readily enhanced, and thus the heat-seal strength of the biaxially oriented polypropylene film can be further improved. The content amount of the polypropylene copolymer in the intermediate layer C is more preferably 80 mass% or more, even more preferably 90 mass% or more, particularly preferably 95 mass% or more, and may be 100 mass% or more. The polypropylene copolymer contained in the intermediate layer C may include two or more different polypropylene copolymers, and the total content amount is preferably included in the above range.

The content amount of an α-olefin component other than propylene in the polypropylene copolymer contained in the intermediate layer C, i.e. the total amount of ethylene and an α-olefin having 4 or more carbon atoms, is preferably 4.0 mol% or more. In this case, the content amount of propylene in the polypropylene copolymer is 96 mol% or less, and the total of the propylene content amount and the content amount of the α-olefin component other than propylene is 100 mol%. The content amount is more preferably 4.0 mol% or more, even more preferably 5.0 mol% or more, particularly preferably 6.0 mol% or more, and more preferably 12 mol% or less, even more preferably 11 mol% or less, particularly preferably 10 mol% or less.

An example of the α-olefin component having 4 or more carbon atoms includes 1-butene, 1-pentene, 3-methyl-1-pentene, 3-methyl-1-butene, 1-hexene, 4-methyl-1-pentene, 5-ethyl-1-hexene, 1-octene, 1-decene, 1-dodecene, 1-tetradecene, 1-hexadecene, 1-heptadecene, 1-octadecene and 1-eicosene.

The α-olefin component other than propylene is preferably an α-olefin component other than propylene having 2 or more and 20 or less of carbon atoms, more preferably an α-olefin component other than propylene having 2 or more and 10 or less of carbon atoms, even more preferably an α-olefin component other than propylene having 2 or more and 6 or less of carbon atoms, and particularly preferably an α-olefin component other than propylene having 2 or more and 4 or less of carbon atoms.

Hereinafter, various preferred physical properties of the polypropylene-based resin composition is described. When two or more different polypropylene copolymers are used, the physical property values shall be mass-weighted averages of the properties of the respective polypropylene copolymers. The same applies to the sealant layer B described above and the functional layer D described below.

The melting point Tm_{c} of the polypropylene-based resin composition constituting the intermediate layer C is preferably 150°C or lower, more preferably 145°C or lower, and even more preferably 140°C or lower. The heat-seal strength can be improved by adjusting Tm_{c} to the above range. The lower limit of the melting point Tm_{c} of the polypropylene-based resin composition constituting the intermediate layer C is not particularly restricted. For example, the melting point Tm_{c} may be 120°C or higher. The melting point Tm_{c} of the polypropylene-based resin composition constituting the intermediate layer C is preferably higher than the melting point Tm_{b} of the polypropylene-based resin composition constituting the sealant layer B from the viewpoint of improving heat-seal strength.

The melt flow rate (MFR) of the polypropylene-based resin composition constituting the intermediate layer C, measured at a temperature of 230°C under a load of 2.16 kgf, is preferably 3.0 g/10 min or more and 6.0 g/10 min or less. The melt flow rate is more preferably 3.5 g/10 min or more, even more preferably 4.0 g/10 min or more, particularly preferably 4.3 g/10 min or more, and more preferably 5.5 g/10 min or less, even more preferably 5.0 g/10 min or less, particularly preferably 4.8 g/10 min or less. The melt flow rate of the polypropylene-based resin composition constituting the intermediate layer C is preferably smaller than the melt flow rate of the polypropylene-based resin composition constituting the sealant layer B from the viewpoint of improving heat-seal strength.

For example, the polypropylene copolymer contained in the intermediate layer C is preferably at least one selected from the group consisting of a propylene-butene copolymer, a propylene-ethylene-butene copolymer and a propylene-ethylene copolymer, and more preferably a propylene-ethylene-butene copolymer.

### 3-2. Propylene-ethylene-butene copolymer

The content amount of an α-olefin component other than propylene in the propylene-ethylene-butene copolymer in the intermediate layer C is preferably 4 mol% or more. When the content amount of an α-olefin component other than propylene is 4 mol% or more, the interlayer adhesion between the intermediate layer C and the sealant layer B tends to be improved, and as a result, the heat-seal strength and the sealing performance tend to be improved. The content amount of an α-olefin component other than propylene is more preferably 5 mol% or more and even more preferably 6 mol% or more. The upper limit of the content amount of an α-olefin component other than propylene is not particularly restricted. For example, the content amount may be 25 mol% or less. When two or more types of α-olefin components other than propylene are used, the total amount thereof is regarded as the content amount of the α-olefin component other than propylene.

The ethylene content amount is preferably 1 mol% or more and more preferably 2 mol% or more. The upper limit of the ethylene content amount is not particularly restricted. For example, the ethylene content amount may be 10 mol% or less, since when the ethylene content amount is excessively high, crystallization may be excessively suppressed and thus the crystallinity may become lower in comparison with a propylene homopolymer and as a result, the stiffness of the film may become decreased.

The butene content amount is preferably 1 mol% or more and more preferably 2 mol% or more. The upper limit of the butene content amount is not particularly restricted. For example, the butene content amount may be 16 mol% or less, since when the butene content amount is excessively high, crystallization may be excessively suppressed and thus the crystallinity becomes lower in comparison with a propylene homopolymer and as a result, the stiffness of the film may become decreased.

An example of the propylene-ethylene-butene copolymer having a total content amount of an α-olefin component other than propylene of 4 mol% or more includes a commercially available product such as FSX66E8 manufactured by Sumitomo Chemical.

### 3-3. Propylene-butene copolymer

The content amount of butene in the propylene-butene copolymer is preferably 4 mol% or more. When the butene content amount is 4 mol% or more, the interlayer adhesion between the intermediate layer C and the sealant layer B tends to be improved, and as a result, the heat-seal strength and the sealing performance tend to be improved. The butene content amount is preferably 5 mol% or more and more preferably 6 mol% or more. The upper limit of the butene content amount is not particularly restricted. For example, the butene content amount may be adjusted to 16 mol% or less and preferably 12 mol% or less, since when the butene content amount is excessively high, crystallization may be excessively suppressed, and thus crystallinity may become lower than that of a propylene homopolymer and consequently the stiffness of the film may be decreased. An example of the propylene-butene copolymer having a butene content amount of 4 mol% or more includes a commercially available product such as SP7843 manufactured by Sumitomo Chemical, SPX78J1 manufactured by Sumitomo Chemical and XR110H manufactured by Mitsui Chemicals.

### 3-4. Propylene-ethylene copolymer

The content amount of ethylene in the propylene-ethylene copolymer is preferably 4 mol% or more. When the ethylene content amount is 4 mol% or more, the interlayer adhesion between the intermediate layer C and the sealant layer B tends to be improved, and as a result, the heat-seal strength and the sealing performance tend to be improved. The ethylene content amount is more preferably 5 mol% or more and even more preferably 6 mol% or more. The upper limit of the ethylene content amount is not particularly restricted. For example, the ethylene content amount is 12 mol% or less, since when the ethylene content amount is excessively high, crystallization may be excessively suppressed, and as a result, crystallinity may become lower than that of a propylene homopolymer and consequently the stiffness of the film may be decreased. An example of the propylene-ethylene copolymer having an ethylene content amount of 4 mol% or more includes a commercially available product such as PC540R manufactured by SunAllomer and VM3588FL manufactured by Mitsui Chemicals.

### 3-5. Antifogging agent

The polypropylene-based resin composition constituting the intermediate layer C may or may not contain an antifogging agent. As the antifogging agent, the antifogging agents described in the explanation of the base layer A may be used. Even when the polypropylene-based resin composition constituting the intermediate layer C does not contain an antifogging agent, an antifogging agent may migrate from the base layer A to the intermediate layer C during the film-forming process and thus the resulting biaxially oriented polypropylene film may contain the antifogging agent in the intermediate layer C.

As long as the effects of the present invention are not impaired, the polypropylene-based resin composition constituting the intermediate layer C may contain a resin other than the polypropylene copolymer and an additive such as the above-described antifogging agent, a known heat stabilizer, an antioxidant, a ultraviolet absorber, a nucleating agent, a tackifier, a flame retardant and an inorganic or organic filler. An example of a resin other than the polypropylene copolymer includes a polyolefin resin other than the polypropylene copolymer used in the sealant layer B, and various elastomers. The amount of the resin and additive is preferably small. The amount of the resin other than the polypropylene copolymer in the polypropylene-based resin composition constituting the intermediate layer C is preferably 30 mass% or less, more preferably 10 mass% or less, even more preferably 5 mass% or less, particularly preferably 2 mass% or less, and may be 0 mass% or more. The amount of an additive other than a resin in the polypropylene-based resin composition constituting the intermediate layer C is preferably 10 mass% or less, more preferably 5 mass% or less, even more preferably 2 mass% or less, particularly preferably 1 mass% or less, and may be 0 mass% or more.

### 4. Functional layer D

The functional layer D is preferably provided on the surface of the base layer A opposite to the surface on which the sealant layer B is provided. The functional layer D is not particularly restricted, and may be a layer having the same composition as the intermediate layer C, or the polypropylene-based resin composition constituting the functional layer D may further contain an additive such as an antiblocking agent, a lubricant including wax and metal soap, a plasticizer, a processing aid and an antistatic agent in order to impart a function such as slip property between the films, slip property between the film and a processing equipment, and an antistatic property to the functional layer D.

### 4-1. Polypropylene-based resin composition

The functional layer D is preferably a layer composed of a polypropylene-based resin composition, and more preferably contains a polypropylene copolymer containing an α-olefin other than propylene. In other words, the polypropylene-based resin composition constituting the functional layer D more preferably contains a polypropylene copolymer containing an α-olefin other than propylene. The term "polypropylene copolymer" in the description relating to the functional layer D refers to a polypropylene copolymer containing an α-olefin other than propylene. The functional layer D preferably contains the polypropylene copolymer in an amount of 70 mass% or more, more preferably 80 mass% or more, even more preferably 90 mass% or more and particularly preferably 95 mass% or more. The proportion may be 100 mass% or less. As the polypropylene copolymer contained in the functional layer D, two or more different polypropylene copolymers may be used, and the total content amount thereof is preferably included within the above range. When the content amount of the polypropylene copolymer is adjusted to 70 mass% or more and 100 mass% or less, the interlayer adhesion between the functional layer D and a layer adjacent thereto can be more easily enhanced, and thus the heat-seal strength of the biaxially oriented polypropylene film can be further improved.

The content amount of an α-olefin component other than propylene in the polypropylene copolymer contained in the functional layer D, that is, the total content amount of ethylene and an α-olefin having 4 or more carbon atoms, is preferably 4.0 mol% or more. In this case, the content amount of propylene in the polypropylene copolymer is 96 mol% or less, and the total of the content amount of propylene and the content amount of an α-olefin component other than propylene is 100 mol%. The content amount is more preferably 4.0 mol% or more, even more preferably 5.0 mol% or more, particularly preferably 6.0 mol% or more, and more preferably 12 mol% or less, even more preferably 11 mol% or less, particularly preferably 10 mol% or less.

An example of the α-olefin component having 4 or more carbon atoms includes 1-butene, 1-pentene, 3-methyl-1-pentene, 3-methyl-1-butene, 1-hexene, 4-methyl-1-pentene, 5-ethyl-1-hexene, 1-octene, 1-decene, 1-dodecene, 1-tetradecene, 1-hexadecene, 1-heptadecene, 1-octadecene and 1-eicosene.

The α-olefin component other than propylene is preferably an α-olefin component other than propylene having 2 or more and 20 or less of carbon atoms, more preferably an α-olefin component other than propylene having 2 or more and 10 or less of carbon atoms, even more preferably an α-olefin component other than propylene having 2 or more and 6 or less of carbon atoms, and particularly preferably an α-olefin component other than propylene having 2 or more and 4 or less of carbon atoms.

The melting point Tm_{d} of the polypropylene-based resin composition constituting the functional layer D is preferably 150°C or lower, more preferably 145°C or lower, and even more preferably 140°C or lower. When Tm_{d} is adjusted within the above range, the heat seal strength can be improved. The lower limit of the melting point Tm_{d} of the polypropylene-based resin composition constituting the functional layer D is not particularly restricted. For example, Tm_{d} is 120°C or higher.

The melt flow rate (MFR) of the polypropylene-based resin composition constituting the functional layer D, measured at a temperature of 230°C under a load of 2.16 kgf, is preferably 3.0 g/10 min or more and 6.0 g/10 min or less. The melt flow rate is more preferably 3.5 g/10 min or more, even more preferably 4.0 g/10 min or more, particularly preferably 4.3 g/10 min or more, and more preferably 5.5 g/10 min or less, even more preferably 5.0 g/10 min or less, particularly preferably 4.8 g/10 min or less.

For example, the polypropylene copolymer contained in the functional layer D is preferably at least one selected from the group consisting of a propylene-butene copolymer, a propylene-ethylene-butene copolymer and a propylene-ethylene copolymer, and more preferably a propylene-ethylene-butene copolymer.

### 4-2. Propylene-ethylene-butene copolymer

The content amount of an α-olefin component other than propylene in the propylene-ethylene-butene copolymer is preferably 4 mol% or more. When the content amount of an α-olefin component other than propylene is 4 mol% or more, the interlayer adhesion between the functional layer D and a layer adjacent to the functional layer D tends to be improved, and as a result, the heat-seal strength and the sealing performance tend to be improved. The content amount of an α-olefin component other than propylene is more preferably 5 mol% or more and even more preferably 6 mol% or more. The upper limit of the content amount of an α-olefin component other than propylene is not particularly restricted. For example, the content amount may be 25 mol% or less. When two or more types of α-olefin components other than propylene are used, the total amount thereof is regarded as the content amount of the α-olefin component other than propylene.

The content amount of ethylene is preferably 1 mol% or more and more preferably 2 mol% or more. The upper limit of the ethylene content amount is not particularly restricted. For example, the ethylene content amount is 10 mol% or less, since when the ethylene content amount is excessively high, the film surface may become tacky, thereby causing deterioration in slipperiness and antiblocking property.

The butene content amount is preferably 1 mol% or more and more preferably 2 mol% or more. The upper limit of the butene content amount is not particularly restricted. For example, the butene content amount is 16 mol% or less, since when the butene content amount is excessively high, the film surface may become tacky, thereby causing deterioration in slipperiness and antiblocking property.

An example of the propylene-ethylene-butene copolymer having a total content amount of an α-olefin component other than propylene of 4 mol% or more includes a commercially available product such as FSX66E8 manufactured by Sumitomo Chemical.

### 4-3. Propylene-butene copolymer

The content amount of butene in the propylene-butene copolymer is preferably 4 mol% or more. When the butene content amount is 4 mol% or more, the interlayer adhesion between the functional layer D and a layer adjacent to the functional layer D tends to be improved, and as a result, the heat-seal strength and the sealing performance tend to be improved. The butene content amount is more preferably 5 mol% or more and even more preferably 6 mol% or more. The upper limit of the butene content amount is not particularly restricted. For example, the butene content amount may be 16 mol% or less and is preferably 12 mol% or less, since when the butene content amount is excessively high, the film surface may become tacky, thereby causing deterioration in slipperiness and antiblocking property. An example of the propylene-butene copolymer having a butene content amount of 4 mol% or more includes a commercially available product such as SP7843 manufactured by Sumitomo Chemical, SPX78J1 manufactured by Sumitomo Chemical and XR110H manufactured by Mitsui Chemicals.

### 4-4. Propylene-ethylene copolymer

The content amount of ethylene in the propylene-ethylene copolymer is preferably 4 mol% or more. When the ethylene content amount is 4 mol% or more, the interlayer adhesion between the functional layer D and a layer adjacent to the functional layer D tends to be improved, and as a result, the heat-seal strength and the sealing performance tend to be improved. The ethylene content amount is more preferably 5 mol% or more and even more preferably 6 mol% or more. The upper limit of the ethylene content amount is not particularly restricted. For example, the ethylene content amount is 12 mol% or less, since when the ethylene content amount is excessively high, the film surface may become tacky, thereby causing deterioration in slipperiness and antiblocking property. An example of the propylene-ethylene copolymer having an ethylene content amount of 4 mol% or more incudes a commercially available product such as PC540R manufactured by SunAllomer and VM3588FL manufactured by Mitsui Chemicals.

### 4-5. Antifogging agent

The polypropylene-based resin composition constituting the functional layer D may or may not contain an antifogging agent. As the antifogging agent, the antifogging agents described in the explanation of the base layer A may be used. Even when the polypropylene-based resin composition constituting the functional layer D does not contain an antifogging agent, an antifogging agent may migrate from the base layer A to the functional layer D during the film-forming process and thus the resulting biaxially oriented polypropylene film may contain the antifogging agent in the functional layer D.

As long as the effects of the present invention are not impaired, the polypropylene-based resin composition constituting the functional layer D may contain a resin other than the polypropylene copolymer and an additive such as the above-described antifogging agent, a known heat stabilizer, an antioxidant, a ultraviolet absorber, a nucleating agent, a tackifier, a flame retardant and an inorganic or organic filler.

An example of a resin other than the polypropylene copolymer includes a polyolefin resin other than the polypropylene copolymer used in the functional layer D, and various elastomers. The amount of the resin and additive is preferably small. The amount of the resin other than the polypropylene copolymer in the polypropylene-based resin composition constituting the functional layer D is preferably 30 mass% or less, more preferably 10 mass% or less, even more preferably 5 mass% or less, particularly preferably 2 mass% or less, and may be 0 mass% or more. The amount of an additive other than a resin in the polypropylene-based resin composition constituting the functional layer D is preferably 10 mass% or less, more preferably 5 mass% or less, even more preferably 2 mass% or less, particularly preferably 1 mass% or less, and may be 0 mass% or more.

### 5. Content amount of antifogging agent in film

The content amount of the antifogging agent in the biaxially oriented polypropylene film of the present invention is preferably 0.1 mass% or more and 10 mass% or less. The content amount is more preferably 0.15 mass% or more, even more preferably 0.2 mass% or more, particularly preferably 0.25 mass% or more, most preferably 0.3 mass% or more, and more preferably 5.0 mass% or less, even more preferably 3.0 mass% or less, particularly preferably 2.0 mass% or less, most preferably 1.5 mass% or less. Even when the antifogging agent is added only to the polypropylene-based resin composition constituting the base layer A, the antifogging agent migrates from the base layer A to other layers during film formation and during storage after film formation. When the antifogging agent migrates to the sealant layer B, which is the outermost surface layer, the antifogging agent becomes present on the surface of the sealant layer B, thereby providing an antifogging property.

### 6. Layer configuration and thickness configuration of biaxially oriented polypropylene film

The biaxially oriented polypropylene film of the present invention includes a base layer A and a sealant layer B. An intermediate layer C may be provided between the base layer A and the sealant layer B. With respect to the layer configuration of the biaxially oriented polypropylene film of the present invention, as long as the film includes the base layer A and the sealant layer B and has the sealant layer B on at least one outermost surface, the film may include the intermediate layer C between the base layer A and the sealant layer B, may further include another layer between the base layer A and the intermediate layer C, and the intermediate layer C may be directly laminated on the base layer A. In addition, another layer may be provided between the intermediate layer C and the sealant layer B, and the sealant layer B may be directly laminated on the intermediate layer C. An example of the configuration of the biaxially oriented polypropylene film of the present invention includes a two-layer structure of base layer A/sealant layer B, a three-layer structure of base layer A/intermediate layer C/sealant layer B, a three-layer structure of sealant layer B1/base layer A/sealant layer B2, a four-layer structure of sealant layer B1/base layer A/intermediate layer C/sealant layer B2, a five-layer structure of sealant layer B1/intermediate layer C1/base layer A/intermediate layer C2/sealant layer B2, and a six-layer structure of sealant layer B1/base layer A1/intermediate layer C1/base layer A2/intermediate layer C2/sealant layer B2. In the structures, the base layer A1 and the base layer A2 may be formed from different polypropylene-based resin compositions or may be formed from the same polypropylene-based resin composition. The intermediate layer C1 and the intermediate layer C2 may be formed from different polypropylene-based resin compositions or may be formed from the same polypropylene-based resin composition. The sealant layer B1 and the sealant layer B2 may be formed from different polypropylene-based resin compositions or may be formed from the same polypropylene-based resin composition.

When the biaxially oriented polypropylene film of the present invention includes the functional layer D, the functional layer D may be directly laminated on the surface of the base layer A, or the intermediate layer C may be interposed between the base layer A and the functional layer D. The functional layer D may also be positioned between the base layer A and the intermediate layer C or between the intermediate layer C and the sealant layer B. When the functional layer D is included, the layer configuration is not particularly restricted as long as the film includes the base layer A, the intermediate layer C and the sealant layer B in this order and has the sealant layer B on at least one outermost surface. An example thereof includes a four-layer structure of functional layer D/base layer A/intermediate layer C/sealant layer B, which further includes the functional layer D in the structure of base layer A/intermediate layer C/sealant layer B, and a five-layer structure of functional layer D/intermediate layer C/base layer A/intermediate layer C/sealant layer B, which further includes the functional layer D in the structure of intermediate layer C/base layer A/intermediate layer C/sealant layer B.

The total thickness of the biaxially oriented polypropylene film of the present invention varies depending on the intended application and method of use. The total thickness is preferably 5 µm or more and 100 µm or less from the viewpoint of the film strength, the sealing performance and the water vapor barrier property. The thickness is more preferably 10 µm or more, even more preferably 18 µm or more, and preferably 80 µm or less, even more preferably 50 µm or less. When the biaxially oriented polypropylene film of the present invention is used as a freshness-preserving packaging material, the thickness is preferably 33 µm or less, more preferably 28 µm or less, even more preferably 23 µm or less, and particularly preferably 18 µm or less.

The thickness of the base layer A varies depending on the intended application and method of use, and is preferably 5 µm or more and 90 µm or less. The film strength, the sealing performance and/or the water vapor barrier property can be improved by adjusting the thickness to 5 µm or more. In addition, the environmental impact can be reduced through volume reduction by adjusting the thickness to 90 µm or less. The thickness of the base layer A is more preferably 10 µm or more, even more preferably 15 µm or more, and more preferably 50 µm or less, even more preferably 30 µm or less.

The thickness of the intermediate layer C varies depending on the intended application and method of use, and is preferably 0.5 µm or more and 4 µm or less. The adhesion between the base layer A and the sealant layer B can be improved by adjusting the thickness to 0.5 µm or more, thereby increasing the seal strength. In addition, the environmental impact can be reduced through volume reduction by adjusting the thickness to 4 µm or less. The thickness of the intermediate layer C is more preferably 1 µm or more and 3 µm or less.

The thickness of the sealant layer B varies depending on the intended application and method of use, and is preferably 0.3 µm or more and 2 µm or less. The heat-seal strength can be improved by adjusting the thickness to 0.3 µm or more. In addition, the environmental impact can be reduced through volume reduction by adjusting the thickness to 2 µm or less. The thickness of the sealant layer B is more preferably 0.5 µm or more and 1.5 µm or less.

The thickness of the functional layer D varies depending on the intended application and method of use, and is preferably 0.3 µm or more and 2 µm or less. The heat-seal strength can be improved by adjusting the thickness to 0.3 µm or more. In addition, the environmental impact can be reduced through volume reduction by adjusting the thickness to 2 µm or less. The thickness of the functional layer D is more preferably 0.5 µm or more and 1.5 µm or less.

### 7. Production method for biaxially oriented polypropylene film

The method for producing the biaxially oriented polypropylene film of the present invention is not particularly restricted. For example, a method may be employed in which a multilayer melt-laminated film is formed using an extruder depending on the number of the layers by a T-die method or an inflation method, and the resulting unstretched multilayer film is then cooled by a chill roll method, a water-cooling method or an air-cooling method, followed by stretching using a sequential biaxial stretching method, a simultaneous biaxial stretching method, a tubular stretching method or the like.

Hereinafter, a method for producing a biaxially oriented polypropylene film having the structure of functional layer D/base layer A/intermediate layer C/sealant layer B by a sequential biaxial stretching method is exemplified. It should be noted that the following example may be appropriately modified depending on the layer configuration and other conditions. The polypropylene resin compositions respectively constituting the base layer A, intermediate layer C, sealant layer B and functional layer D are as described above. The amount of the antifogging agent added to the base layer A, intermediate layer C and sealant layer B is preferably adjusted in consideration of volatilization into the atmosphere when exposed to high temperatures during the film production process.

Each of the polypropylene-based resin composition respectively constituting the functional layer D, base layer A, intermediate layer C and sealant layer B is melt-extruded using one or more extruders, and the extruded multilayer sheet is cooled by a chill roll to form an unstretched sheet. Next, the obtained unstretched sheet is stretched in the machine direction (MD). Subsequently, the stretched sheet is preheated and then stretched in the width direction (TD), followed by heat-setting, whereby the biaxially oriented polypropylene film of the present invention can be obtained. If necessary, a surface treatment may be applied to at least one side of the biaxially oriented polypropylene film, and the film may then be wound using a winder to obtain a film roll.

### 7-1. Extrusion step

For example, each of the polypropylene resin composition respectively constituting the functional layer D, base layer A, intermediate layer C and sealant layer B is melted at 200°C or higher and 260°C or lower, and is fed through four extruders from different flow channels. The respective molten polypropylene-based resin compositions thus delivered are multilayer-laminated using a multilayer feed block, a static mixer, a multilayer multi-manifold die or the like, to form a multilayer sheet laminated in the order of functional layer D/base layer A/intermediate layer C/sealant layer B, which is then extruded from a T-die. Alternatively, a multilayer sheet may also be obtained by using only a single extruder and introducing a multilayering device into the melt line from the extruder to the T-die. It is preferred to install a gear pump in the polymer flow path from the viewpoint of stabilizing back pressure and suppressing thickness variation.

Though the thickness of the unstretched multilayer sheet is preferably 3500 µm or less and more preferably 3000 µm or less from the viewpoint of improving cooling efficiency, the thickness may be appropriately adjusted according to the film thickness after sequential biaxial stretching. The thickness of the unstretched multilayer sheet can be adjusted by the extrusion rate of the polypropylene resin composition, the lip width of the T-die or the like. The lower limit of the thickness of the unstretched multilayer sheet is not particularly restricted, and may be, for example, 500 µm.

### 7-2. Cooling step

The unstretched multilayer sheet coextruded in sheet form from the T-die is brought into contact with a metallic cooling roll and thereby cooled and solidified. At this time, it is preferred that the sealant layer B side be brought into contact with the cooling roll. In addition, it is preferred to further cool the unstretched multilayer sheet cooled by the cooling roll, for example, by immersing the sheet in a water tank for the purpose of promoting solidification.

The temperature of the cooling roll is preferably 10°C or higher and not higher than the crystallization temperature of the polypropylene resin composition. When it is desired to improve the transparency of the film, cooling and solidification are preferably carried out using a cooling roll at 10°C or higher and 50°C or lower. When the temperature of the cooling roll is 50°C or lower, the transparency of the unstretched multilayer sheet tends to be improved. The temperature is more preferably 40°C or lower and even more preferably 30°C or lower. Though the cooling temperature is preferably adjusted to 40°C or higher in some cases in order to increase the degree of crystal orientation after sequential biaxial stretching, the temperature of the cooling roll is preferably adjusted to 40°C or lower and more preferably 30°C or lower from the viewpoint of facilitating stretching in the subsequent step and reducing thickness unevenness in the case where a propylene homopolymer having a mesopentad fraction of 97.0% or more is used as described above. When a water tank is used, the temperature of the water tank is also preferably 10°C or higher and 50°C or lower, more preferably 40°C or lower and even more preferably 30°C or lower for the same reasons as described above.

### 7-3. Machine-direction stretching step

The stretching temperature in the machine direction is preferably Tm - 30°C or higher and Tm - 7°C or lower. When the temperature is Tm - 30°C or higher, width-direction stretching subsequently performed becomes easier, and thickness unevenness can also be more easily reduced. When the temperature is Tm - 7°C or lower, the heat shrinkage rate can be more easily reduced, and deterioration in film quality due to sticking to stretching rolls, difficulty in stretching or increased surface roughness is less likely to occur. The temperature is more preferably Tm - 27°C or higher, even more preferably Tm - 25°C or higher, and more preferably Tm - 12°C or lower, even more preferably Tm - 10°C or lower. The Tm refers to the melting point of the resin forming the thickest layer.

The stretching ratio in the machine direction is preferably 3.5 times or more and 8.0 times or less. When the stretching ratio is 3.5 times or more, the strength can be more easily improved and the thickness unevenness can also be more easily reduced. When the stretching ratio is 8.0 times or less, width-direction stretching in the width-direction stretching step can be more easily performed, thereby facilitating improvement in productivity. The stretching ratio is more preferably 3.8 times or more, even more preferably 4.2 times or more, and more preferably 7.0 times or less, even more preferably 6.0 times or less.

Though machine-direction stretching may be performed in multiple stages of two or more stages using three or more pairs of stretching rolls, stretching in a single stage using two pairs of stretching rolls is preferred. When stretching is performed in multiple stages, the highest stretching temperature is preferably included within the above range.

### 7-4. Preheating step

The uniaxially stretched film after machine-direction stretching is preferably heated in the preheating step so that the polypropylene resin composition is sufficiently softened before the width-direction stretching step. The heating temperature in the preheating step is preferably Tm or higher and Tm + 25°C or lower. Softening proceeds and thus width-direction stretching becomes easier by adjusting the heating temperature in the preheating step to the melting point or higher. In addition, orientation proceeds during width-direction stretching, thereby facilitating development of rigidity by adjusting the heating temperature in the preheating step to Tm + 25°C or lower. The heating temperature is more preferably Tm + 2°C or higher, even more preferably Tm + 3°C or higher, and more preferably Tm + 20°C or lower, even more preferably Tm + 15°C or lower. When the preheating step includes a plurality of zones, the temperature of the zone having the highest temperature is regarded as the preheating temperature. The Tm refers to the melting point of the resin forming the thickest layer.

### 7-5. Width-direction stretching step

The stretching temperature in the width direction is preferably Tm - 10°C or higher and not higher than the heating temperature in the preheating step. When the temperature is Tm - 10°C or higher, the rigidity of the resulting film can be more easily improved. When the temperature is not higher than the heating temperature in the preheating step, stretching unevenness is less likely to occur. The temperature is more preferably Tm - 9°C or higher, even more preferably Tm - 7°C or higher, particularly preferably Tm - 5°C or higher, and more preferably Tm + 10°C or lower, even more preferably Tm + 7°C or lower, particularly preferably Tm + 5° C or lower. The Tm refers to the melting point of the resin forming the thickest layer.

It is preferred to provide a late-stage stretching step in which stretching is performed at a lower temperature, subsequent to the width-direction stretching step within the above temperature range (hereinafter referred to as the "early-stage stretching step" in some cases), in the width-direction stretching step. The rigidity of the film can be more easily improved by providing the late-stage stretching step.

The stretching ratio in the width direction is preferably 10 times or more and 20 times or less. When the stretching ratio is 10 times or more, the rigidity can be more easily improved and the thickness unevenness can also be more easily reduced. When the stretching ratio is 20 times or less, the heat shrinkage rate can be more easily reduced and the breakage during stretching is less likely to occur. The stretching ratio is more preferably 11 times or more, even more preferably 12 times or more, particularly preferably 12.5 times or more, and more preferably 17 times or less, even still more preferably 15 times or less.

When the late-stage stretching step is additionally provided, the total stretching ratio is preferably included within the above range.

### 7-6. Heat-treatment step

It is preferred to perform a heat treatment after completion of the width-direction stretching step. Specific means for the heat treatment include a method in which a zone having a temperature higher than that of the stretching zone is provided after completion of width-direction stretching, and a method in which the zone temperature is increased during the latter half of stretching and the film is allowed to pass through a zone having the same temperature even after completion of stretching so as to raise the temperature of the film. Though an example of the heating means includes a method of blowing hot air and a method of heating with an infrared heater, the heating means is not particularly restricted as long as the heating means is capable of raising the temperature of the film above the temperature at the completion of the width-direction stretching step.

The heat-treatment step is preferably performed immediately after completion of the width-direction stretching step, that is, immediately after stretching in the width direction reaches the final stretching ratio. The temperature in the heat-treatment step is preferably higher than the temperature at the completion of the width-direction stretching step, and is specifically preferably the width-direction stretching temperature + 1°C or higher. In addition, the heat-treatment step is preferably performed in two stages. Specifically, it is preferred that heat treatment is performed at a temperature higher than the temperature at the completion of the width-direction stretching step in an early-stage heat-treatment step and then heat treatment is subsequently performed in a late-stage heat-treatment step at a temperature lower than that in the early-stage heat-treatment step. The early-stage heat-treatment step and the late-stage heat-treatment step are described below.

### 7-6-1. Early-stage heat-treatment step

The heating temperature in the early-stage heat-treatment step is preferably Tm or higher and Tm + 20°C or lower. The relaxation proceeds, the molecular chain tension is reduced, and crystallization can proceed more reliably by heating at Tm or higher. In contrast, the relaxation of the oriented molecular chain can be suppressed while suppressing melting by heating at Tm + 20°C or lower, thereby more reliably preventing a decrease in rigidity. The heating temperature is more preferably Tm + 3°C or higher, even more preferably Tm + 4°C or higher, particularly preferably Tm + 5°C or higher, and more preferably Tm + 18°C or lower, even more preferably Tm + 14°C or lower, particularly preferably Tm + 10°C or lower. The molecular chain orientation formed during stretching is relaxed, and crystallization is more likely to occur in the subsequent late-stage heat-treatment step by performing heating in the heat-treatment step after the stretching step. The temperature may be gradually increased from the temperature at the completion of width-direction stretching to the heating temperature, or may be increased stepwise or in a single step. It is preferred to increase the temperature stepwise or in a single step, since the molecular chain orientation in the film can be more easily controlled. The Tm refers to the melting point of the resin forming the thickest layer.

The film may or may not be relaxed in the width direction in the early-stage heat-treatment step. Specifically, the relaxation ratio is preferably 0% or more and 3% or less. When the relaxation ratio is included within the range, a decrease in rigidity is less likely to occur, and the film thickness variation tends to be reduced. The relaxation ratio is more preferably 0% or more and 1% or less, and even more preferably 0%. In other words, it is preferred not to relax the film. When higher rigidity is desired, the film may not be relaxed. In addition, slight expansion may be performed in order to suppress sagging of the film as long as the effects of the present invention are not impaired.

### 7-6-2. Late-stage heat-treatment step

The heating temperature in the late-stage heat-treatment step is preferably Tm - 70°C or higher and Tm or lower. When the heating temperature is Tm - 70°C or higher, lamellar thickening proceeds, and the melting point of the film tends to increase. In other words, heat resistance at high temperatures can be obtained. In contrast, when the heating temperature is Tm or lower, crystallization proceeds and the heat shrinkage rate tends to decrease. The heating temperature is more preferably Tm - 50°C or higher, even more preferably Tm - 40°C or higher, particularly preferably Tm - 30°C or higher, and more preferably Tm - 1°C or lower, even more preferably Tm - 2°C or lower, particularly preferably Tm - 3°C or lower. The Tm refers to the melting point of the resin forming the thickest layer.

The film may be relaxed in the width direction for the purpose of adjusting the heat shrinkage rate in the late-stage heat-treatment step. When the film is relaxed, the relaxation ratio is preferably 1% or more and 8% or less. When the relaxation ratio is included within the range, a decrease in the rigidity is less likely to occur, and the film thickness variation tends to be reduced. The relaxation ratio is more preferably 2% or more, even more preferably 3% or more, and more preferably 6% or less, even more preferably 5% or less. When higher rigidity is desired, the film may not be relaxed.

A molecular chain remains excessively constrained in the width-direction stretching step, since the molecular chain is oriented but a strong degree of entanglement remains by stretching. When a heat-treatment step is performed in this state, sufficient heat resistance cannot be exhibited at high temperature, since the crystallization degree may not be increased due to a large number of molecular chains excessively bound by entanglement, the lamellar thickness of the crystalline region may not be increased, and a crystalline region that melts at relatively low temperatures is formed. Thus, crystallization has been promoted by applying relaxation of several percent to several tens of percent to the film in the heat-treatment step of conventional film-forming processes in order to release the entanglement of molecular chains after width-direction stretching. Nevertheless, it has been difficult for conventional processes to achieve both heat resistance and rigidity, since such relaxation reduces the orientation of the molecular chains formed in the width-direction stretching step, resulting in a decrease in film rigidity. In addition, when heat treatment is performed at high temperature, the film becomes whitened due to excessive melting.

It is preferred to perform heat treatment immediately after the completion of width-direction stretching at a temperature higher than the width-direction stretching temperature, for example, with a relaxation ratio of 1% or more and 5% or less, preferably 3% or less, so as to release the constraint due to excessive entanglement while maintaining molecular chain orientation in order to solve this problem. The crystallinity increases, and the lamellar thickness of crystalline regions can be more easily increased, thereby enabling sufficient heat resistance even at high temperature by performing this heat-treatment step, since the number of constrained molecular chains associated with entanglement is reduced.

It is preferred to increase the amount of the low-molecular-weight polypropylene component in the polypropylene resin composition constituting the biaxially oriented polypropylene film, since the entanglement of molecular chains can be reduced, thereby weakening the thermal shrinkage stress in the portion other than the lamellae of the crystalline region and thus further reducing the heat shrinkage ratio.

### 7-7. Cooling Step

The film is preferably cooled immediately after the heat treatment step. The cooling temperature is preferably 10°C or higher and 140°C or lower. The cooling temperature is more preferably 15°C or higher, even more preferably 20°C or higher, and more preferably 135°C or lower, even more preferably 130°C or lower, particularly preferably 80°C or lower, most preferably 50°C or lower. The state of molecular orientation within the film can be fixed by providing the cooling step.

### 7-8. Surface treatment step

It is preferred to subject at least one of the sealant layer B and the surface layer on the side opposite to the sealant layer B of the biaxially oriented polypropylene film according to the present invention to a surface treatment in order to improve printability, laminating property and the like. It is more preferred to subject the sealant layer B to a surface treatment from the viewpoint of increasing the surface tension of the sealant layer B. The surface treatment method is not particularly restricted, and an example thereof includes corona discharge treatment, plasma treatment, flame treatment and acid treatment. It is preferred to perform any one of corona discharge treatment, plasma treatment and flame treatment, since continuous processing is possible and the treatments can be easily carried out before the winding step in the film-forming process of the film. Corona discharge treatment is more preferred from the viewpoint of enhancing antifogging property.

### 8. Various properties of biaxially oriented polypropylene film according to present invention

The biaxially oriented polypropylene film of the present invention preferably has the following properties. The term "machine direction (MD)" in the biaxially oriented polypropylene film of the present invention refers to the direction corresponding to the flow direction in the film production process, and the term "width direction (TD)" refers to the direction orthogonal to the flow direction in the film production process in this disclosure. The same applying hereinafter.

If the flow direction of a polypropylene film in the film production process is unknown, a wide-angle X-ray is incident in a direction perpendicular to the film surface, and the scattering peak derived from the (110) plane of the α-type crystal is scanned in the circumferential direction to obtain diffraction intensity distribution. Then, the direction in which the diffraction intensity distribution exhibits the highest diffraction intensity is defined as the "machine direction", and the direction orthogonal thereto is defined as the "width direction".

### 8-1. Width direction length

When the temperature is raised from 30°C to 130°C at a heating rate of 10°C/min in thermomechanical analysis, the percentage of (X₁ - X₀)/X₀ is preferably 0.50% or less, wherein the width direction length of the biaxially oriented polypropylene film of the present invention at 30°C is defined as X₀, the maximum width direction length during the heating as X₁, and the minimum width direction length during the heating as X₂. When the percentage is 0.50% or less, deformation of the film can be suppressed even after the film is heated at a high temperature during processing such as roll heating, printing or heat sealing, and thus deterioration of film flatness is less likely to occur, and processability of the film can be improved. In addition, high-temperature printing ink is transferred during printing, and in such a case, misregistration of printing pitch is less likely to occur. The percentage is more preferably 0.45% or less, even more preferably 0.40% or less, particularly preferably 0.35% or less, and most preferably 0.30% or less. The smaller value of (X₁ - X₀)/X₀ is preferred, and the lower limit thereof is not particularly restricted. For example, the percentage may be 0.01% or more and preferably 0.02% or more from a technical standpoint.

The biaxially oriented polypropylene film of the present invention preferably has a percentage of (X₂ - X₀)/X₀ of -0.50% or more. When the percentage is -0.50% or more, deformation of the film can be suppressed even after the film is heated at high-temperature in processes such as roll heating, printing and heat sealing, so that deterioration of film flatness is less likely to occur and the processability of the film can be improved. The percentage is more preferably -0.45% or more, even more preferably -0.40% or more, particularly preferably - 0.35% or more, and most preferably -0.30% or more. A larger value of the percentage of (X₂ - X₀)/X₀ is more preferred, and the upper limit thereof is not particularly restricted. For example, the percentage may be 0.01% or less and preferably 0.00% or less in view of technical difficulty.

When the biaxially oriented polypropylene film of the present invention is heated from 30°C to 160°C at a heating rate of 10°C/min in thermal mechanical analysis, the temperature at which the length of the film in the width direction becomes 0.9950 × X₀ or less, i.e., the temperature corresponding to 0.5% shrinkage, is preferably 129°C or higher, more preferably 130°C or higher, even more preferably 131°C or higher, particularly preferably 132°C or higher, and most preferably 133°C or higher. The term "temperature at which the length in the width direction becomes 0.9950 × X₀ or less" refers to the lowest temperature among temperatures at which the length in the width direction becomes 0.9950 × X₀ or less when heated from 30°C to 160°C at a heating rate of 10°C/min. When the temperature at which the length becomes 0.9950 × X₀ or less is 129°C or higher, deformation of the film can be suppressed even after the film is heated at high-temperature in processes such as roll heating, printing and heat sealing, so that deterioration in film flatness is less likely to occur and processability of the film can be improved. A higher value of the temperature at which the length becomes 0.9950 × X₀ or less is more preferred, and the upper limit thereof is not particularly restricted. For example, the temperature may be 160°C or less and is preferably 156°C or less. When the temperature is 160°C or less, practical production is facilitated and transparency can be easily maintained.

### 8-2. Loss elastic modulus

The loss elastic modulus is determined by dynamic viscoelasticity measurement. Specifically, the film is heated from -60°C to 160°C at a heating rate of 5°C/min under a nitrogen atmosphere at a measuring load of 10 g and a frequency of 10 Hz, and the loss elastic modulus is measured at each temperature during heating. The inventors of the present invention have found that, while increasing rigidity and heat resistance alone may fail to maintain film flatness after heating in some cases, flatness can be maintained even after heating the film by controlling the loss elastic modulus in a predetermined temperature range to fall within a predetermined range.

Hereinafter, five parameters relating to the loss elastic modulus are described: a maximum value E" (A) of the loss elastic modulus in the temperature range of -25°C to 25°C, a minimum value E" (B) of the loss elastic modulus in the temperature range of 25°C to 75°C, a maximum value E" (C) of the loss elastic modulus in the temperature range of 100°C to 160°C, E" (C)/E" (A), and E" (B)/E" (C). Even when the term "loss elastic modulus" is simply described, the term refers to the loss elastic modulus in the width direction in all cases in this disclosure.

### 8-2-1. Maximum value E" (A) of loss elastic modulus in temperature range of -25°C to 25°C

It is described in "Temperature Dispersion of Crystalline Polymers" by TAKAYANAGI Motoo, Kobunshi: High Polymers, Japan, The Society of Polymer Science, 1961, Vol. 10, No. 3, pp. 289-295, that a polypropylene film undergoes relaxation (main dispersion) due to micro-Brownian motion of the main chain in the temperature range of -25°C to 25°C, and that the loss elastic modulus in the range of -25°C to 25°C increases as the degree of orientation increases due to stretching. The inventors of the present invention have found that the orientation in the film can be increased by using a polypropylene having high stereoregularity and employing the above-described width-direction stretching step, and consequently the value of the loss elastic modulus in the range of -25°C to 25°C can be increased.

The biaxially oriented polypropylene film of the present invention preferably has an E" (A) of 0.40 GPa or more. When E" (A) is 0.40 GPa or more, the rigidity tends to be increased. The E" (A) is more preferably 0.42 GPa or more, even more preferably 0.44 GPa or more, particularly preferably 0.46 GPa or more, and most preferably 0.48 GPa or more. The upper limit of E" (A) is not particularly restricted. For example, E" (A) may be 0.70 GPa or less as a practical value, and is preferably 0.60 GPa or less.

### 8-2-2. Minimum Value E" (B) of loss elastic modulus in temperature range of 25°C to 75°C

It is disclosed in "Temperature Dispersion of Crystalline Polymers" by TAKAYANAGI Motoo, Kobunshi: High Polymers, Japan, The Society of Polymer Science, 1961, Vol. 10, No. 3, pp. 289-295, that relaxation associated with melting is less likely to occur, and relaxation of the amorphous portion is also suppressed as a result thereof by increasing the degree of crystallinity in the film, which greatly contributes to heat resistance, and reducing crystals that melt in a relatively low temperature region above the glass transition temperature of the polypropylene resin (hereinafter referred to as the "low-temperature region"). In other words, it is described that even when treated at high temperatures, the mobility of the amorphous portion becomes low, thereby providing excellent heat resistance. The inventors of the present have found that the crystal that melts in the above low-temperature region can be reduced, and the change in the loss elastic modulus from the glass transition temperature to 75°C can be reduced by using a polypropylene having high stereoregularity and employing the above-described width direction stretching step.

The biaxially oriented polypropylene film of the present invention preferably has an E" (B) of 0.16 GPa or more. When E" (B) is 0.16 GPa or more, the heat shrinkage ratio tends to decrease. In addition, when E" (B) is 0.16 GPa or more, the number of crystals melting in the above-described low temperature range is reduced, thereby improving flatness. The E" (B) is more preferably 0.17 GPa or more, even more preferably 0.18 GPa or more, particularly preferably 0.19 GPa or more, and most preferably 0.20 GPa or more. The upper limit of E" (B) is not particularly restricted. For example, the E" (B) may be 0.60 GPa or less as a practical value, and is preferably 0.50 GPa or less.

### 8-2-3. Maximum Value E" (C) of loss elastic modulus in temperature range of 100°C to 160°C

It is disclosed in "Temperature Dispersion of Crystalline Polymers" by TAKAYANAGI Motoo, Kobunshi: High Polymers, Japan, The Society of Polymer Science, 1961, Vol. 10, No. 3, pp. 289-295, that when a stretched polypropylene film is heated and the loss elastic modulus at each temperature is measured, a peak derived from crystal dispersion appears at 100°C or higher. This peak of crystal dispersion is considered to originate from an increase in frictional viscosity between planes of the crystal structure, and increases when the film is stretched at an optimum temperature during film formation. An increase in frictional viscosity indicates strong stress transmission within the crystalline phase, and is considered to correlate with an increase in rigidity. The inventors of the present invention found on the basis of the above findings that the maximum value of the loss elastic modulus at 100°C or higher can be increased by using a polypropylene having high stereoregularity and employing the above-described width direction stretching step.

The biaxially oriented polypropylene film of the present invention preferably has an E" (C) of 0.28 GPa or more and 0.80 GPa or less. When E" (C) is 0.28 GPa or more, the film exhibits high rigidity, thereby facilitating retention of the bag shape when formed into a packaging bag and making deformation of the film during processing such as printing less likely to occur. When E" (C) is 0.80 GPa or less, practical production is facilitated and tearing in the width direction is less likely to occur. The E" (C) is more preferably 0.29 GPa or more, even more preferably 0.30 GPa or more, particularly preferably 0.31 GPa or more, and most preferably 0.32 GPa or more. The E" (C) is also more preferably 0.75 GPa or less, even more preferably 0.70 GPa or less, particularly preferably 0.65 GPa or less, and most preferably 0.60 GPa or less.

The biaxially oriented polypropylene film of the present invention preferably has an E" (C)/E" (A) of 0.55 or more, and more preferably 0.55 or more and 1.30 or less. When E" (C)/E" (A) is 0.55 or more, the film exhibits high rigidity, thereby facilitating retention of the bag shape when formed into a packaging bag and making deformation of the film during processing such as printing less likely to occur. When E" (C)/E" (A) is 1.30 or less, practical production is facilitated and tearing in the width direction is less likely to occur. The E" (C)/E" (A) is even more preferably 0.60 or more or 0.62 or more, particularly preferably 0.64 or more, and most preferably 0.66 or more. The E" (C)/E" (A) is even more preferably 1.20 or less or 1.10 or less, particularly preferably 1.00 or less, and most preferably 0.90 or less.

The biaxially oriented polypropylene film of the present invention preferably has an E" (B)/E" (C) of 0.55 or more, and more preferably 0.55 or more and 1.30 or less. When E" (B)/E" (C) is 0.55 or more, the number of crystals melting in the low temperature range is reduced, so that relaxation associated with melting is less likely to occur, and relaxation of the amorphous portion is also suppressed as a result thereof. Consequently, even when treated at high temperatures, the mobility of the amorphous portion becomes low, thereby improving flatness and heat resistance. When E" (B)/E" (C) is 1.30 or less, the rigidity is less likely to decrease and the thickness variation of the film tends to be reduced. The E" (B)/E" (C) is even more preferably 0.60 or more or 0.61 or more, particularly preferably 0.62 or more, and most preferably 0.63 or more. The E" (B)/E" (C) is even more preferably 1.25 or less or 1.20 or less, particularly preferably 1.15 or less, and most preferably 1.10 or less.

### 8-3. Storage elastic modulus

The storage elastic modulus is determined by dynamic viscoelasticity measurement. Specifically, the storage elastic modulus is measured at each temperature during heating by heating from -60°C to 160°C at a heating rate of 5°C/min under a nitrogen atmosphere, a measuring load of 10 g and a frequency of 10 Hz.

The biaxially oriented polypropylene film of the present invention preferably has a storage elastic modulus in the machine direction at 23°C of 2.0 GPa or more and 5.0 GPa or less. The storage elastic modulus is more preferably 2.3 GPa or more, even more preferably 2.5 GPa or more, particularly preferably 2.9 GPa or more, and most preferably 3.0 GPa or more. The storage elastic modulus is also more preferably 4.5 GPa or less, even more preferably 4.3 GPa or less, particularly preferably 4.2 GPa or less, and most preferably 4.0 GPa or less.

The biaxially oriented polypropylene film of the present invention preferably has a storage elastic modulus in the width direction at 23°C of 7.0 GPa or more and 15.0 GPa or less. The storage elastic modulus is more preferably 7.3 GPa or more, even more preferably 7.6 GPa or more, and particularly preferably 8.0 GPa or more. The storage elastic modulus is also more preferably 14.0 GPa or less, even more preferably 13.5 GPa or less, and particularly preferably 13.0 GPa or less.

When the storage elastic modulus at 23°C in both the machine direction and the width direction are included within the above ranges, the strength of the biaxially oriented polypropylene film is significantly increased, and sufficient stiffness and strength can be maintained even when the film is thin, thereby greatly contributing to reduction in film volume.

The biaxially oriented polypropylene film of the present invention preferably has a storage elastic modulus in the machine direction at 120°C of 0.5 GPa or more and 2.5 GPa or less. The storage elastic modulus is more preferably 0.6 GPa or more, even more preferably 0.7 GPa or more, and particularly preferably 0.8 GPa or more. The storage elastic modulus is also more preferably 2.3 GPa or less, even more preferably 2.1 GPa or less, and particularly preferably 2.0 GPa or less. When the storage elastic modulus in the machine direction at 120°C is included within the above range, the strength at high temperatures tends to be increased, and pitch misalignment during printing is less likely to occur when transferring high-temperature printing ink during printing.

The biaxially oriented polypropylene film of the present invention preferably has a storage elastic modulus in the width direction at 120°C of 1.5 GPa or more and 8.0 GPa or less. The storage elastic modulus is more preferably 1.8 GPa or more, even more preferably 2.0 GPa or more, and particularly preferably 2.1 GPa or more. The storage elastic modulus is also more preferably 7.8 GPa or less, even more preferably 7.6 GPa or less, and particularly preferably 7.4 GPa or less. When the storage elastic modulus in the width direction at 120°C is included within the above range, the strength at high temperatures tends to be increased, and pitch misalignment during printing is less likely to occur when transferring high-temperature printing ink during printing. In addition, the deterioration in the film flatness is less likely to occur, and processability of the film can be improved.

The biaxially oriented polypropylene film of the present invention preferably has a storage elastic modulus in the machine direction at 140°C of 0.3 GPa or more and 1.5 GPa or less. The storage elastic modulus is more preferably 0.35 GPa or more, even more preferably 0.4 GPa or more, and particularly preferably 0.45 GPa or more. The storage elastic modulus is also more preferably 1.45 GPa or less, even more preferably 1.4 GPa or less, and particularly preferably 1.35 GPa or less.

The biaxially oriented polypropylene film of the present invention preferably has a storage elastic modulus in the width direction at 140°C of 0.9 GPa or more and 5.0 GPa or less. The storage elastic modulus is more preferably 1.0 GPa or more, even more preferably 1.2 GPa or more, and particularly preferably 1.3 GPa or more. The storage elastic modulus is also more preferably 4.5 GPa or less, even more preferably 4.0 GPa or less, and particularly preferably 3.5 GPa or less.

When the storage elastic modulus at 140°C in both the machine direction and the width direction are included within the above ranges, the strength at high temperatures tends to be increased, and pitch misalignment during printing is less likely to occur when transferring high-temperature printing ink during printing. In addition, the deterioration in the film flatness is less likely to occur, and the processability of the film can be improved.

The biaxially oriented polypropylene film of the present invention preferably has a storage elastic modulus in the machine direction at 150°C of 0.1 GPa or more and 1.0 GPa or less. The storage elastic modulus is more preferably 0.15 GPa or more, even more preferably 0.2 GPa or more, and particularly preferably 0.25 GPa or more. The storage elastic modulus is also more preferably 0.9 GPa or less, even more preferably 0.8 GPa or less, and particularly preferably 0.7 GPa or less.

The biaxially oriented polypropylene film of the present invention preferably has a storage elastic modulus in the width direction at 150°C of 0.85 GPa or more and 2.5 GPa or less. The storage elastic modulus is more preferably 0.9 GPa or more, even more preferably 0.95 GPa or more, and particularly preferably 1.0 GPa or more. The storage elastic modulus is also more preferably 2.4 GPa or less, even more preferably 2.3 GPa or less, and particularly preferably 2.2 GPa or less.

When the storage elastic modulus at 150°C in both the machine direction and the width direction are included within the above ranges, the strength at high temperatures tends to be increased, and pitch misalignment during printing is less likely to occur when transferring high-temperature printing ink during printing. In addition, the deterioration in the film flatness is less likely to occur, and processability of the film can be improved.

The biaxially oriented polypropylene film of the present invention preferably has a sum of the storage elastic modulus in the machine direction at 23°C and the storage elastic modulus in the machine direction at 140°C of 2.8 GPa or more and 8.0 GPa or less. The sum of the storage elastic moduli is more preferably 3.0 GPa or more, even more preferably 3.1 GPa or more, and particularly preferably 3.2 GPa or more. The sum is also more preferably 7.5 GPa or less, even more preferably 7.0 GPa or less, and particularly preferably 6.5 GPa or less.

The biaxially oriented polypropylene film of the present invention preferably has a sum of the storage elastic modulus in the width direction at 23°C and the storage elastic modulus in the width direction at 140°C of 8.5 GPa or more and 19.0 GPa or less. The sum of the storage elastic moduli is more preferably 8.8 GPa or more, even more preferably 9.1 GPa or more, and particularly preferably 9.5 GPa or more. The sum is also more preferably 18.0 GPa or less, even more preferably 17.0 GPa or less, and particularly preferably 16.0 GPa or less.

When each of the above sums is included within the respective above-described ranges, the strength at high temperatures tends to be increased, and pitch misalignment during printing is less likely to occur when transferring high-temperature printing ink during printing. In addition, the deterioration in the film flatness is less likely to occur, and processability of the film can be improved.

### 8-4. Other physical properties other than loss elastic modulus and storage elastic modulus

### 8-4-1. Stress at 5% elongation (F5)

The biaxially oriented polypropylene film of the present invention preferably has a stress at 5% elongation (F5) in the machine direction at 23°C of 40 MPa or more and 70 MPa or less. When the F5 is 40 MPa or more, the film exhibits high rigidity, thereby facilitating retention of the bag shape when formed into a packaging bag and making deformation of the film during processing such as printing less likely to occur. When the F5 is 70 MPa or less, practical production is facilitated and the balance between the machine direction and the width direction tends to be improved. The F5 is more preferably 42 MPa or more, even more preferably 46 MPa or more, and particularly preferably 48 MPa or more. The F5 is also more preferably 65 MPa or less, even more preferably 62 MPa or less, and particularly preferably 60 MPa or less. The F5 in the machine direction can be adjusted to fall within the above range by controlling the stretching ratio and relaxation rate, or by adjusting the temperature during film formation.

The biaxially oriented polypropylene film of the present invention preferably has a stress at 5% elongation (F5) in the width direction at 23°C of 90 MPa or more and 280 MPa or less. When the F5 is 90 MPa or more, the film exhibits high rigidity, thereby facilitating retention of the bag shape when formed into a packaging bag and making deformation of the film during processing such as printing less likely to occur. When the F5 is 90 MPa or more, the flatness can be improved. When the F5 is 280 MPa or less, practical production is facilitated and tearing in the width direction is less likely to occur. The F5 is more preferably 110 MPa or more or 120 MPa or more, even more preferably 130 MPa or more, particularly preferably 150 MPa or more, and most preferably 156 MPa or more. The F5 is also more preferably 250 MPa or less, even more preferably 230 MPa or less, particularly preferably 210 MPa or less, and most preferably 200 MPa or less. The F5 in the width direction can be adjusted to fall within the above range by controlling the stretching ratio and relaxation rate, or by adjusting the temperature during film formation.

### 8-4-2. Heat shrinkage ratio at 120°C

The biaxially oriented polypropylene film of the present invention preferably has a heat shrinkage ratio in the machine direction at 120°C of 2.5% or less. When the heat shrinkage ratio is 2.5% or less, pitch misalignment during printing is less likely to occur when transferring printing ink. The heat shrinkage ratio is more preferably 2.0% or less, even more preferably 1.7% or less, and particularly preferably 1.5% or less. A lower heat shrinkage ratio in the machine direction at 120°C is more preferred. The lower limit thereof is not particularly restricted. For example, the heat shrinkage ratio may be 0.1% or more in view of technical difficulty, and is preferably 0.3% or more. The heat shrinkage ratio in the machine direction at 120°C can be adjusted to fall within the above range by controlling the stretching ratio, stretching temperature and heat treatment temperature.

The biaxially oriented polypropylene film of the present invention preferably has a heat shrinkage ratio in the width direction at 120°C of 1.1% or less. When the heat shrinkage ratio is 1.1% or less, wrinkling during heat sealing is less likely to occur. The heat shrinkage ratio is more preferably 1.0% or less, even more preferably 0.7% or less, particularly preferably 0.5% or less, and most preferably 0.3% or less. The lower limit of the heat shrinkage ratio in the width direction at 120°C is not particularly restricted. For example, the lower limit is -0.2%. The heat shrinkage ratio in the width direction at 120°C can be adjusted to fall within the above range by controlling the stretching ratio, stretching temperature and heat treatment temperature.

The biaxially oriented polypropylene film of the present invention preferably has a sum of the heat shrinkage ratios in the machine direction and the width direction at 120°C of 3.5% or less. When the sum is 3.5% or less, the flatness is easily improved, and pitch misalignment during printing when transferring printing ink is further less likely to occur. The sum is more preferably 3.0% or less, even more preferably 2.5% or less, particularly preferably 2.0% or less, and most preferably 1.7% or less. A lower value of the sum is more preferred. The lower limit thereof is not particularly restricted. For example, the sum may be 1.0% or more in view of technical difficulty, and is preferably 1.3% or more. The sum of the heat shrinkage ratios in the machine direction and the width direction at 120°C can be adjusted to fall within the above range by controlling the stretching ratio, stretching temperature and heat treatment temperature.

### 8-4-3. Heat shrinkage ratio at 150°C

The biaxially oriented polypropylene film of the present invention preferably has a heat shrinkage ratio in the machine direction at 150°C of 10% or less. When the heat shrinkage ratio is 10% or less, pitch misalignment during printing is less likely to occur when transferring printing ink. The heat shrinkage ratio is more preferably 7.0% or less, even more preferably 6.0% or less, particularly preferably 5.0% or less, and most preferably 4.0% or less. A lower heat shrinkage ratio in the machine direction at 150°C is more preferred. The lower limit thereof is not particularly restricted. For example, the heat shrinkage ratio may be 0.1% or more in view of technical difficulty, and is preferably 0.5% or more. The heat shrinkage ratio in the machine direction at 150°C can be adjusted to fall within the above range by controlling the stretching ratio, stretching temperature and heat treatment temperature.

The biaxially oriented polypropylene film of the present invention preferably has a heat shrinkage ratio in the width direction at 150°C of 20% or less. When the heat shrinkage ratio is 20% or less, wrinkling during heat sealing is less likely to occur. The heat shrinkage ratio is more preferably 15% or less, even more preferably 12% or less, and particularly preferably 10% or less. The lower limit of the heat shrinkage ratio in the width direction at 150°C is not particularly restricted. For example, the heat shrinkage ratio may be 0% or more, and is preferably 1% or more. The heat shrinkage ratio in the width direction at 150°C can be adjusted to fall within the above range by controlling the stretching ratio, stretching temperature and heat treatment temperature.

When the heat shrinkage ratio in the machine direction is 10% or less and the heat shrinkage ratio in the width direction at 150°C is 20% or less, wrinkling during heat sealing is less likely to occur. In particular, when the heat shrinkage ratio in the machine direction at 150°C is 8.0% or less and the heat shrinkage ratio in the width direction at 150°C is 15% or less, the distortion is small when a zipper portion is heat-sealed to an opening portion, which is therefore preferable. In order to reduce the heat shrinkage ratio at 150°C, it is effective to set the amount of components having a molecular weight of 100,000 or less, as determined from an integral curve obtained by gel permeation chromatography (GPC) of the polypropylene resin composition constituting the film, to 35% or more by mass.

### 8-4-4. Thickness uniformity

The biaxially oriented polypropylene film of the present invention preferably has a lower limit of thickness uniformity of 0%, more preferably 0.1%, even more preferably 0.5%, and particularly preferably 1%. The upper limit of the thickness uniformity is preferably 20%, more preferably 17%, even more preferably 15%, particularly preferably 12%, and most preferably 10%. Within the above range, defects are less likely to occur during post-processing such as coating and printing, and the film is suitable for use in applications requiring high precision.

The method for determining the thickness uniformity is as follows. A 40 mm-wide test piece is cut in the width direction from a steady-state region in which film properties are stable in the machine direction of the film. The film thickness is continuously measured over a length of 20,000 mm using a film feeding device (Model No. A90172) manufactured by Mikuron Measurement and a continuous film thickness measuring device (Product name: K-313A Wide-Range High-Sensitivity Electronic Micrometer) manufactured by Anritsu Corporation, and the thickness uniformity is calculated according to the following formula. 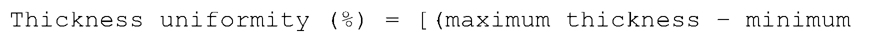 Thickness uniformity (%) = [(maximum thickness - minimum 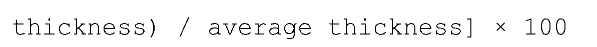 thickness) / average thickness] × 100

### 8-4-5. Haze

The biaxially oriented polypropylene film of the present invention preferably has an upper limit of haze of 7.0%. When the haze is 7.0% or less, the film is suitable for applications requiring transparency. The haze is more preferably 5.0% or less, even more preferably 4.0% or less, particularly preferably 3.5% or less, and most preferably 3.0% or less. The lower limit of haze is preferably 0%, and a practical value is 0.1%. The haze can be adjusted to fall within the above range by controlling the cooling roll temperature, the machine-direction stretching temperature, the preheating temperature before the width-direction stretching in a tenter, the width-direction stretching temperature, the heat-setting temperature, or the amount of components having a molecular weight of 100,000 or less in the polypropylene polymer. The haze may increase depending on the addition of an antiblocking agent or the composition of the sealant layer B.

### 8-4-6. Image clarity

The biaxially oriented polypropylene film of the present invention preferably has a lower limit of image clarity of 55%. When the image clarity is 55% or more, the film is suitable for applications requiring transparency. The image clarity is more preferably 57% or more, even more preferably 59% or more, particularly preferably 61% or more, and most preferably 65% or more. The upper limit of the image clarity is preferably 100%, and a practical value thereof is 95%. The image clarity can be adjusted to fall within the above range by controlling the cooling roll temperature, the machine-direction stretching temperature, the preheating temperature before width-direction stretching in a tenter, the width-direction stretching temperature, the heat-setting temperature, or the amount of components having a molecular weight of 100,000 or less in the polypropylene polymer. The image clarity may increase depending on the addition of an antiblocking agent or the composition of the sealant layer B.

### 8-4-7. Clarity

The biaxially oriented polypropylene film of the present invention preferably has a lower limit of clarity of 90%. When the clarity is 90% or more, the film is suitable for applications requiring transparency. The clarity is more preferably 92% or more, even more preferably 93% or more, particularly preferably 94% or more, and most preferably 95% or more. The upper limit of the clarity is preferably 100%, and a practical value thereof is 99%. The clarity can be adjusted to fall within the above range by controlling the cooling roll temperature, the machine-direction stretching temperature, the preheating temperature before width-direction stretching in a tenter, the width-direction stretching temperature, the heat-setting temperature, or the amount of components having a molecular weight of 100,000 or less in the polypropylene polymer. The clarity may increase depending on the addition of an antiblocking agent or the composition of the sealant layer B.

### 9. Use

The biaxially oriented polypropylene film of the present invention exhibits little dimensional change over the entire temperature range from room temperature to 130°C. Therefore, the deformation of the film can be suppressed even after high temperature heating in processes such as roll heat processing, printing, and heat sealing, so that the deterioration in the film flatness is less likely to occur and the processability of the film can be improved. In addition, the film can be made thinner, thereby contributing to volume reduction of a packaging material.

When the biaxially oriented polypropylene film of the present invention is used, the biaxially oriented polypropylene film is suitable for packaging applications, since the biaxially oriented polypropylene film readily maintains the bag shape when formed into a packaging bag, is less likely to undergo deformation during processing such as high-temperature heat sealing, and is less prone to printing pitch misalignment during printing for the above reasons. In addition, even after coating with a silicone release agent and subsequent heat drying, the film is less likely to lose the flatness thereof, and is therefore also suitable as a release film for optical applications and other applications requiring a high degree of flatness.

When a bag for packaging food is formed, a preformed bag is filled with a content and then heated so that the film is melted and fused to be sealed. Alternatively, when bag-forming and food-filling are performed simultaneously, film is similarly sealed in many cases. In general, a sealant film made of a polyethylene resin or a polypropylene resin is laminated onto the biaxially oriented polypropylene film of the present invention as a base film, and the sealant film surfaces are fused to each other. In the heat-sealing method, pressure is applied from the base film side using a heating plate to press the film and form a seal, and the seal width is often about 10 mm in many cases. In this process, the base film is also heated, and expansion and shrinkage during heating may cause wrinkles. Since wrinkles decrease the durability of the bag and also negatively affect consumer appeal, it is desirable to minimize wrinkles. The sealing temperature may be about 120°C in some cases; however, higher sealing temperature is required in order to increase bag-forming processing speed, and even under such a condition, it is preferred that dimensional change be small. In addition, when a zipper is fused to the opening portion of the bag, even higher sealing temperature is required.

### 10. Heat Seal Strength

The biaxially oriented polypropylene film of the present invention preferably has a heat seal strength of the sealant layer B side at 130°C of 4.8 N/15 mm or more, as measured by the method described below, in order to prevent leakage of a content. The heat seal strength is more preferably 5.0 N/15 mm or more, even more preferably 5.5 N/15 mm or more, and particularly preferably 6.0 N/15 mm or more. The upper limit thereof may be about 8.0 N/15 mm. A higher value than this is generally not necessary, and if the heat seal strength is too high, the package may become difficult to open.

When one surface of the biaxially oriented polypropylene film of the present invention is the sealant layer B and the other surface is the functional layer D, the heat-sealed portion after bag-making is folded and the functional layer D surfaces are adhered to each other in order to maintain the packaging configuration like, for example, a Z-type packaging structure. In such a case, the heat seal strength at 130°C on the functional layer D side is preferably lower than the heat seal strength at 130°C on the sealant layer B side so that the bag can be easily opened by hand. For example, the heat seal strength on the functional layer D side is 3.5 N/15 mm or less, preferably 2.0 N/15 mm or less, and more preferably 1.0 N/15 mm or less.

### 11. Heat-seal initiation temperature

The heat-seal initiation temperature of the sealant layer B of the biaxially oriented polypropylene film according to the present invention is preferably 90°C or higher and 130°C or lower. When the heat-seal initiation temperature of the sealant layer B is 130°C or lower, a high heat-seal strength can be exhibited at a relatively low temperature of about 130°C, and therefore the temperature of processing equipment during heat sealing can be kept relatively low, enabling highspeed operation in automatic packaging. In addition, since heat-sealing can be performed at a relatively low temperature, the film as a whole is less likely to shrink, and a wrinkle is less likely to occur in the sealed portion. It is possible to reduce the tendency of the film to adhere to film-forming equipment by setting the heat-seal initiation temperature of the sealant layer B to 90°C or higher. The above temperature is more preferably 100°C or higher, even more preferably 110°C or higher, and more preferably 125°C or lower, even more preferably 120°C or lower.

The heat-seal initiation temperature can be adjusted within the above range by controlling the raw material composition of each layer described above, in particular the raw material composition of the base layer A, as well as the stretching ratio during film formation, the relaxation rate, and the temperatures of each film-forming step.

### 12. Dynamic coefficient of friction

The dynamic coefficient of friction of the biaxially oriented polypropylene film according to the present invention is preferably 0.50 or less on both sides, i.e., both on the sealant layer B and on the surface layer opposite to the sealant layer B. When the dynamic coefficient of friction is 0.50 or less on both sides, the unwinding of the film from a roll can be performed smoothly, and the film is easily processed in a printing operation. The dynamic coefficient of friction is more preferably 0.48 or less and even more preferably 0.45 or less. The lower limit of the dynamic coefficient of friction is not particularly restricted. For example, the dynamic coefficient of friction may be 0.10 or more.

### 13. Wetting tension

The wetting tension of the surface of the sealant layer B of the biaxially oriented polypropylene film according to the present invention is preferably 35 mN/m or more. When the wetting tension is 35 mN/m or more, adhesion to the surface layer on the side opposite to the sealant layer B can be improved. In addition, when the wetting tension is 35 mN/m or more, the antifogging property of the film can be enhanced. It is preferred to perform physicochemical surface treatment such as corona treatment or flame treatment in order to set the wetting tension to 35 mN/m or more. It is preferred to perform discharge in air using a preheating roll and a treatment roll in corona treatment. The wetting tension is more preferably 37 mN/m or more. Since the effect is saturated when the wetting tension is excessively high, the wetting tension is preferably 43 mN/m or less.

### 14. Antifogging property

The antifogging property of the surface of the sealant layer B of the biaxially oriented polypropylene film according to the present invention is preferably such that the evaluation obtained by the evaluation method described below is grade 1 to 3, more preferably grade 1 to 2, and even more preferably grade 1.

### 15. Packaging material

When the biaxially oriented polypropylene film of the present invention is used as a packaging material, the film may be used alone or may be used with a printing layer provided thereon.

A packaging material using the biaxially oriented polypropylene film of the present invention can be used to produce a bag of three-side seal type, a pillow type and gusset type packaging bag having excellent seal strength and good appearance of the sealed portion.

The biaxially oriented polypropylene film of the present invention can be subjected to letterpress printing, planographic printing, gravure printing, stencil printing or transfer printing depending on the intended use.

The present application claims the benefit of the priority date of Japanese patent application No. 2024-14403 filed on February 1, 2024. All of the contents of the Japanese patent application No. 2024-14403 filed on February 1, 2024, are incorporated by reference herein.

### EXAMPLES

Hereinafter, the present invention is described with Examples and is not restricted to the Examples.

The evaluation methods used in each Example and Comparative Example are as follows.

The term "surface layer on the side opposite to the sealant layer B" refers to the base layer A in Examples 3 and 4, and to the functional layer D in Examples 1 and 2 and Comparative Examples 1 to 4.

### (1) Melt flow rate of polypropylene resin

The melt flow rate (MFR) was measured in accordance with JIS K7210 under the condition of a temperature of 230°C and a load of 2.16 kgf.

### (2) Mesopentad fraction of polypropylene resin

The mesopentad fraction of the polypropylene resin [mmmm]%) was measured using ¹³C-NMR. The mesopentad fraction was calculated in accordance with the method described in Zambelli et al., Macromolecules, Vol. 6, p. 925 (1973). The ¹³C-NMR measurement was performed using an "AVANCE 500" manufactured by Bruker. A 200 mg sample was dissolved in a mixed solvent of o-dichlorobenzene and benzene-d₆ in a ratio of 8:2 at 135°C, and the measurement was conducted at 110°C.

### (3) Amount of component having molecular weight of 100,000 or less

An integral curve of polypropylene-equivalent molecular weights was obtained based on monodisperse polystyrene standards using gel permeation chromatography (GPC). When the baseline was unclear, the baseline was defined within a range extending to the lowest point of the tail on the high-molecular-weight side of the elution peak located closest to the elution peak of the standard substance on the high-molecular-weight side.

The GPC measurement condition is described follows.
· Apparatus: "HLC-8321PC/HT" manufactured by TOSOH Corporation
· Detector: RI
· Solvent: 1,2,4-trichlorobenzene + dibutylhydroxytoluene (0.05%)
· Column: one TSKgel guard column HHR(30)HT (7.5 mm I.D. × 7.5 cm) + three TSKgel GMHHR-H(20)HT columns (7.8 mm I.D. × 30 cm)
· Flow rate: 1.0 mL/min
·Injection volume: 0.3 mL
· Measurement temperature: 140°C

The mass fraction of components having a molecular weight of 100,000 or less was determined from the integral curve of the molecular weight distribution obtained by GPC.

### (4) Melting point and crystallization temperature

A thermal measurement was conducted using a differential scanning calorimeter ("Q1000" manufactured by TA Instruments). Approximately 5 mg was cut from a pellet, charged in an aluminum pan for measurement, and set in the differential scanning calorimeter. The sample was heated from 30°C to 230°C at a heating rate of 20°C/min and maintained at 230°C for 5 minutes under a nitrogen atmosphere to melt the resin. Thereafter, the sample was cooled to 30°C at a cooling rate of -10°C/min and maintained at 30°C for 5 minutes, followed by reheating to 230°C at a heating rate of 10°C/min. The melting point was defined as the main peak temperature of the endothermic peak associated with melting observed during the second heating cycle. The crystallization temperature was defined as the main peak temperature of the exothermic peak observed during cooling from 230°C to 30°C.

### (5) Film thickness

The thickness of the film was measured using a stylus-type film thickness gauge ("Millitron 1202D") manufactured by Seiko EM Corporation.

### (6) Thermomechanical analysis (TMA) measurement (Measurement of film length in width direction from 30°C to 130°C)

The film was cut such that the width direction of the film was 40 mm and the machine direction of the film was 4 mm, and the resulting sample was set in a thermomechanical analyzer ("TMA-60" manufactured by Shimadzu Corporation) so that the chuck width was 10 mm. The sample was heated from 30°C to 130°C at a heating rate of 10°C/min under a measurement load of 0.5 g, while continuously measuring the length X of the sample in the width direction during heating. The maximum value of the length between the chucks during heating was defined as X₁ (mm), and the minimum value of the length between the chucks during heating was defined as X₂ (mm). The percentage values of (X₁ - 10)/10 and (X₂ - 10)/10 were then calculated.

### (7) Thermomechanical analysis (TMA) measurement (Temperature at 0.5% shrinkage)

The film was cut such that the width direction of the film was 40 mm and the machine direction of the film was 4 mm, and the resulting sample was set in a thermomechanical analyzer ("TMA-60" manufactured by Shimadzu Corporation) so that the chuck width was 10 mm. The sample was heated from 30°C to 160°C at a heating rate of 10°C/min under a measurement load of 0.5 g, while continuously measuring the length of the sample in the width direction during heating. From the measurement results, the lowest temperature at which the length of the sample in the width direction became 9.95 mm or less was defined as the temperature at 0.5% shrinkage.

### (8) Loss modulus by dynamic viscoelasticity measurement (DMA)

The film was cut such that the width direction of the film was 40 mm and the machine direction of the film was 4 mm, and the resulting sample was set in a solid viscoelastic analyzer ("RSA-G2" manufactured by TA Instruments Japan) so that the chuck width was 10 mm. The sample was heated from -60°C to 160°C at a heating rate of 5°C/min under a nitrogen atmosphere and a measurement load of 10 g and at a frequency of 10 Hz, while measuring the loss modulus of the film in the width direction during heating. A graph was prepared with temperature on the horizontal axis and loss modulus on the vertical axis, and the maximum value E" (A) of the loss modulus from -25°C to 25°C, the minimum value E" (B) of the loss modulus from 25°C to 75°C, and the maximum value E" (C) of the loss modulus at 100°C or higher were determined respectively. In addition, the value of E" (C)/E" (A) and the value of E" (B)/E" (C) were calculated.

### (9) Storage modulus by dynamic viscoelasticity measurement (DMA)

The storage moduli in the machine direction and the width direction of the film were measured by the following method. The film was cut such that the direction to be measured was 40 mm and the direction perpendicular thereto was 4 mm, and the resulting sample was set in a solid viscoelastic analyzer ("RSA-G2" manufactured by TA Instruments Japan) so that the chuck width was 10 mm. The sample was heated from -60°C to 160°C at a heating rate of 5°C/min under a nitrogen atmosphere and a measurement load of 10 g at a frequency of 10 Hz, and the storage moduli at 23°C, 120°C, 140°C and 150°C were determined. In addition, the sum of the storage moduli at 23°C and 140°C in the machine direction and the sum of the storage moduli in the width direction at 23°C and 140°C were respectively calculated based on the obtained values.

### (10) Haze

Haze was measured at 23°C in accordance with JIS K7105 using a haze meter ("NDH5000" manufactured by Nippon Denshoku Industries).

### (11) Image clarity

Image clarity was measured using an image clarity meter ("ICM-1T" manufactured by Suga Test Instruments) in accordance with the transmission method specified in JIS K7374:2007, with the slit width of the optical comb set to 0.5 mm. The sample was set such that the width direction of the sample was perpendicular to the optical comb of the measuring instrument during the measurement.

### (12) Clarity

Clarity was measured using a transparency meter ("haze-gard i" manufactured by BYK).

The light transmitted through the film during the measurement included straight-transmitted light traveling along the optical axis of the incident parallel light and narrow-angle scattered light having an angle within ±2.5° relative to the optical axis of the parallel light.

When the quantity of the straight-transmitted light was defined as I_{c} and the quantity of the narrow-angle scattered light within ±2.5° was defined as Iₛ, the clarity was calculated according to the following equation. $Clarity \left(%\right) = \left({I}_{c}-{I}_{s}\right) / \left({I}_{c}+{I}_{s}\right) \times 100$

### (13) Stress at 5% elongation (F5), Tensile modulus, Tensile strength at break, and Tensile elongation at break

Various physical properties during tensile test in the machine direction and the width direction of the film were measured at 23°C in accordance with JIS K7127. The film was cut such that the direction to be measured was 200 mm and the direction perpendicular thereto was 15 mm, and the resulting sample was set in a tensile tester ("Dual Column Tabletop Testing System Instron 5965" manufactured by Instron Japan Company Limited) with a chuck distance of 100 mm. Tensile test was performed at a tensile speed of 200 mm/min. The tensile modulus was determined from the slope of the linear region in the initial stage of elongation from the obtained strain-stress curve, and the stress at 5% elongation was defined as F5. The tensile strength at break and the tensile elongation at break were respectively defined as the strength and elongation at the point at which the sample broke.

### (14) Thermal shrinkage ratio

The thermal shrinkage ratios in the machine direction and the width direction of the film were measured by the following method in accordance with JIS Z1712. The film was cut such that the direction to be measured was 200 mm and the direction perpendicular thereto was 20 mm, and the resulting sample was suspended in a hot-air oven at 120°C and heated for 5 minutes. The length after heating was measured, and the thermal shrinkage ratio was determined as the ratio of the shrinkage length relative to the original length.

### (15) Dynamic coefficient of friction

A sample having the machine direction of 400 mm and the width direction of 100 mm was cut from the film. The sample was aged under an atmosphere of 23°C and 65% RH for 12 hours, and then divided into a sample for a test table having the machine direction of 300 mm and the width direction of 100 mm and a sample for a sled having the machine direction of 100 mm and the width direction of 100 mm.

The sample for the test table was set on the test table, and the sample for the sled was attached to the bottom surface of a metal sled (square shape with an area of 39.7 mm²) having a load of 1.5 kg such that the sealant layer B surfaces were in contact with each other.

The dynamic coefficient of friction of the sealant layer B surface was measured using a tensile tester ("Tensilon RTG-1210" manufactured by A&D Company) at a sliding speed of 200 mm/min under conditions of 23°C and 65% RH in accordance with JIS K7125, and the average of three measurements was used.

In addition, the dynamic coefficient of friction of the surface opposite to the sealant layer B was also determined similarly to the above conditions except that the surfaces opposite to the sealant layer B were brought into contact with each other.

### (16) Wetting tension (mN/m)

The film was cut into a size of 297 mm in the machine direction and 210 mm in the width direction, and aged at a temperature of 23°C and a relative humidity of 50% for 24 hours. Then, the wetting tension of the surface on the sealant layer B side of the sample was measured according to the following procedure in accordance with JIS K6768. The atmosphere during the measurement of the wetting tension was a test room atmosphere at a temperature of 23°C and a relative humidity of 50% in accordance with JIS K7100.

The sample was placed on a flat substrate, several drops of a wetting tension standard solution (test mixed liquid described in JIS K 6768) were dropped onto the sealant layer B of the sample, and the wetting tension standard solution was spread over the surface of the sealant layer B with a cotton swab so as to cover an area of 6 cm² or more. The state of the liquid film at 3 seconds after the application was visually observed under a bright condition. The case where no breakage of the liquid film was observed at 3 seconds after the formation of the liquid film and the liquid film retained the state immediately after the application indicated that the surface was wetted. In such a case, a wetting tension standard solution having a surface tension one level higher than that of the wetting tension standard solution used for the liquid film formation was used to form a liquid film. In contrast, when the liquid film broke within less than 3 seconds, a wetting tension standard solution having a surface tension one level lower than that of the wetting tension standard solution used for the liquid film formation was used to form a liquid film. A new cotton swab was used for each liquid film formation.

The above liquid film formation was repeated, and the value of the wetting tension standard solution having the highest value among the wetting tension standard solutions capable of wetting the surface of the sealant layer B for 3 seconds was defined as the wetting tension. Liquid film formation was carried out three times using the wetting tension standard solution having the highest value in order to confirm that the applied state was maintained after 3 seconds had elapsed.

The wetting tension of the surface layer opposite to the sealant layer B was also measured by the same measurement method and calculation method as described above.

### (17) Anti-fogging property

The anti-fogging property of the film surface on the sealant layer B side and the anti-fogging property of the film surface opposite to the sealant layer B side of the film were evaluated according to the following procedure:
1) 300 mL of warm water at 50°C was charged into a 500 mL container having an open top;
2) the opening of the container was sealed with the film, with the film surface to be evaluated for anti-fogging property facing inward;
3) the container was allowed to stand in a cold chamber at 5°C for 30 minutes, and thereafter, the state of dew condensation on the film surface to be evaluated for anti-fogging property was rated according to the following five-grade scale:
   grade 1: no dew condensation observed on the entire surface (adhesion area = 0)
   grade 2: dew condensation adhered to only a small portion of the surface (adhesion area: greater than 0 and not more than 1/4 of the surface area)
   grade 3: dew condensation adhered to less than half of the surface (adhesion area: greater than 1/4 and not more than 2/4 of the surface area)
   grade 4: dew condensation adhered to most of the surface (adhesion area: greater than 2/4 and not more than 3/4 of the surface area)
   grade 5: dew condensation adhered to substantially the entire surface (adhesion area: greater than 3/4 of the surface area).

### (18) Heat-seal initiation temperature

Two samples, each having a length of 20 cm in the machine direction and a width of 5 cm in the width direction, were cut from the film. The two samples were superposed with the sealant layer B surfaces facing each other, and then heat sealing was performed using a heat-gradient tester (manufactured by Toyo Seiki). Five rectangular heat-sealed areas were formed in a single row at the center of the samples in the width direction and arranged parallel to the machine direction of the samples. Each heat-sealed area measured 1 cm in the machine direction and 3 cm in the width direction. The heat-sealed areas were arranged along the machine direction of the samples such that the distance between adjacent heat-sealed areas was 1.5 cm. The heat-sealing temperature differed for each heat-sealed area and was set at 80°C, 85°C, 90°C, 95°C and 100°C. The heat-sealing pressure was 1 kg/cm², and the sealing time was 1 second.

Thereafter, the sample was cut to obtain a test piece having a length of 19 cm in the machine direction and a width of 1.5 cm at the center in the width direction so as to include all five heat-sealed areas. In the machine direction, the sample was cut such that the machine direction of the original sample was parallel to the machine direction of the resulting test piece, and such that the heat-sealed area formed at 90°C was positioned at the center of the test piece in the machine direction. The resulting test piece was mounted between the upper and lower grips of a tensile tester ("Model 5965 Dual Column Tabletop Testing System" manufactured by Instron Corporation), and the heat-seal strength of each heat-sealed area was measured while pulling the test piece at a crosshead speed of 200 mm/min. The heat-seal strength was expressed in N/15 mm.

In addition, another set of two cut samples was prepared, and five test specimens were prepared and evaluated for heat-seal strength similarly to described above, except that heat sealing was performed at 105°C, 110°C, 115°C, 120°C and 125°C.

A linear graph was prepared with temperature on the horizontal axis and heat-seal strength on the vertical axis, and the temperature at which the heat-seal strength reached 1 N/15 mm was defined as the heat-seal initiation temperature. Using separate samples, the measurement of heat-seal strength over the temperature range of 80 to 125°C was repeated twice more to determine the heat-seal initiation temperature for each measurement. Then, the average of the three obtained values was taken as the heat-seal initiation temperature of the film.

The heat-seal initiation temperature of the surface layer opposite to the sealant layer B was also determined similarly to the measurement and calculation procedures as described above, except that the two samples were superposed with the surface layers opposite to the sealant layer B facing each other.

### (19) Heat-seal strength

Two samples, each having a length of 29.7 cm in the machine direction and a width of 21.0 cm in the width direction, were cut from the film. The two samples were superposed with the sealant layer B surfaces facing each other, and heat sealing was performed at 130°C using a heat-gradient tester (manufactured by Toyo Seiki). A rectangular heat-sealed area was formed at the center of the samples in the width direction and arranged parallel to the machine direction of the samples. The heat-sealed area measured 1.5 cm in the machine direction and 3 cm in the width direction. Thereafter, the sample was cut to obtain a test piece having a length of 9.5 cm in the machine direction and a width of 1.5 cm at the center in the width direction. In the machine direction, the sample was cut such that the machine direction of the original sample was parallel to the machine direction of the resulting test piece and such that the heat-sealed area was positioned at the center of the test piece in the machine direction. The resulting test piece was mounted between the upper and lower grips of a tensile tester ("Model 5965 Dual Column Tabletop Testing System" manufactured by Instron Corporation), and the heat-seal strength was measured while pulling the test piece at a crosshead speed of 200 mm/min. The heat-seal strength was expressed in N/15 mm. The measurement of heat-seal strength was repeated using two additional specimens, and then the average of the three measured values was taken as the heat-seal strength of the film.

In addition, the heat-seal strength of the film was also determined similarly to the same measurement and calculation procedures as described above, except that the two samples were superposed with the surface layers opposite to sealant layer B facing each other.

Furthermore, the heat-seal strengths of the sealant layer B and of the surface layer opposite to the sealant layer B were determined similarly to the same measurement and calculation procedures as described above, except that the heat-sealing temperature was changed to 140°C.

### (20) Appearance evaluation of heat-sealed portion

The obtained film was heat-sealed using a heat sealer such that the sealant film surfaces of the laminate faced each other, thereby producing a three-side-sealed pouch having dimensions of 130 mm × 180 mm. The heat-sealing conditions were a pressure of 0.2 MPa, a sealing time of 1 second, a seal bar width of 10 mm, and a heat-sealing temperature of 150°C. The appearance of wrinkles in the heat-sealed portions was visually evaluated.
A: No wrinkles were observed in the heat-sealed portions extending in either the width direction or the machine direction of the film.
B: Wrinkles were observed in the heat-sealed portions extending in only one of the width direction and the machine direction of the film.
C: Wrinkles were observed in the heat-sealed portions extending in both the width direction and the machine direction of the film.

### (21) Flatness evaluation (Flatness after treatment at 130°C)

A sample was cut from the film so as to have dimensions of 200 mm in both the width direction and the machine direction, and was used as an evaluation sample. The sample was suspended in a hot-air oven at 130°C and heated for 5 minutes. After cooling to room temperature, the film was placed on a black background sheet, and the film surface was visually observed under fluorescent lighting from an angle of 45° according to the following criteria.
A: Neither thermal wrinkles nor large undulations having a height of 5 mm or greater were observed.
B: No thermal wrinkles were observed, but large undulations having a height of 5 mm or greater were observed.
C: Thermal wrinkles were observed.

### Raw materials used

The polypropylene-based resins constituting the respective layers of the films in the Examples and Comparative Examples described below are as follows.
PP-1: Propylene homopolymer ("FLX80H5", manufactured by Sumitomo Chemical; mesopentad fraction: 98.9%; melting point: 163°C; MFR: 7.5 g/10 min; content of components having a molecular weight of 10,000 or less: 4.0 mass%; content of components having a molecular weight of 100,000 or less: 40.5 mass%)
PP-2: Propylene homopolymer ("EL80F5", manufactured by Sumitomo Chemical; mesopentad fraction: 98.8%; melting point: 162°C; MFR: 11 g/10 min; content of components having a molecular weight of 10,000 or less: 6.9 mass%; content of components having a molecular weight of 100,000 or less: 53.1 mass%)
PP-3: A composition comprising PP-1, stearyl diethanolamine monostearate, stearyl diethanolamine distearate and stearyl diethanolamine as antifogging agents in a total amount of 1.7 mass%, and glycerol monostearate in an amount of 0.25 mass%
PP-4: Propylene homopolymer ("FY6H", manufactured by Japan Polypropylene Corporation; MFR: 1.9 g/10 min; melting point: 163°C; mesopentad fraction: 98.9%)
PP-5: A composition comprising a propylene homopolymer ("FL203D", manufactured by Japan Polypropylene Corporation; mesopentad fraction: 94.8%; melting point: 161°C; MFR: 3 g/10 min; content of components having a molecular weight of 10,000 or less: 3.0 mass%; content of components having a molecular weight of 100,000 or less: 37.1 mass%), and 1.7 mass% of stearyl diethanolamine monostearate and 0.25 mass% of glycerol monostearate as antifogging agents
PP-6: Propylene-ethylene-butene copolymer ("FSX66M4", manufactured by Sumitomo Chemical; melting point: 138°C; MFR: 4.5 g/10 min; ethylene content: 3.3 mol%; butene content: 2.9 mol%; glycerol monostearate content: 0.45 mass%)
PP-7: Propylene-butene copolymer ("SP7843", manufactured by Sumitomo Chemical; melting point: 128°C; MFR: 6.5 g/10 min; butene content: 8.2 mol%)

### Example 1

### (1) Preparation of raw material for base layer A

A polypropylene-based resin composition comprising 20 mass% of propylene homopolymer PP-1, 20 mass% of propylene homopolymer PP-2, and 60 mass% of propylene homopolymer PP-3 was used as the raw material. Based on the mass-weighted average properties of the respective propylene homopolymers, the polypropylene-based resin composition constituting the base layer A had a mesopentad fraction of 98.88%, a melting point of 162.8°C, an MFR of 8.2 g/10 min, a content of components having a molecular weight of 10,000 or less of 4.58 mass%, and a content of components having a molecular weight of 100,000 or less of 43.02 mass%.

### (2) Raw material for sealant layer B

Propylene-butene copolymer PP-7 was used as the raw material.

### (3) Raw material for functional layer D

Propylene-ethylene-butene copolymer PP-6 was used as the raw material.

### (4) Production of film

First, the polypropylene-based resin compositions constituting the functional layer D/base layer A/sealant layer B were respectively melt-kneaded in extruders at 250°C, 250°C and 210°C using a multilayer feed block. The molten polypropylene-based resin compositions were then coextruded through a T-die at 250°C while being laminated to form a multilayer molten sheet having a thickness of 1.8 mm, such that the thickness ratio of functional layer D/base layer A/seal layer B was 1/14/1.

The functional layer D side of the molten sheet was brought into contact with a cooling roll maintained at 20°C and then immediately introduced into a water bath maintained at 20°C. Thereafter, the sheet was stretched 4.5 times in the machine direction using two pairs of rolls at 142°C. Subsequently, both edges of the sheet were gripped by clips and introduced into a hot-air oven. After preheating at 172°C, the sheet was stretched 12.7 times in the width direction at 162°C. Immediately after the stretching in the width direction, the film was heat-treated at 170°C while being held by the clips without relaxation. Thereafter, the film was heat-treated at 140°C and relaxed in the width direction at a relaxation ratio of 3%. Finally, the film was cooled to room temperature. The surface of the sealant layer B side of the resulting biaxially oriented polypropylene film was subjected to corona treatment using a corona treater manufactured by Softal Corona & Plasma GmbH under conditions of an applied current of 0.75 A and an applied power of 1.8 kW. Then, the treated film was wound up using a winder to obtain the biaxially oriented polypropylene film of the present invention. The resulting film had a total thickness of 16 µm. The thicknesses of each layer of functional layer D/base layer A/sealant layer B were 1 µm/14 µm/1 µm, respectively.

The raw material compositions of the respective layers and the film-forming conditions are shown in Table 1, and various physical properties of the film are shown in Table 2. In the tables, "%" represents mass%.

The biaxially oriented polypropylene film exhibited high rigidity while maintaining a low heat shrinkage rate at elevated temperatures, high seal strength and excellent antifogging property. In addition, the film exhibited excellent flatness after treatment at 130°C. A three-side-sealed pouch produced using the film of Example 1 exhibited an excellent heat-seal appearance and superior stiffness of the finished pouch, thereby providing excellent handling properties.

### Examples 2 to 4

In Examples 2 to 4, the films were produced similarly to Example 1, except that the film production conditions were changed to those shown in Table 1. Various physical properties of the resulting films are shown in Table 2. The biaxially oriented polypropylene films of Examples 2 to 4 exhibited high rigidity while maintaining a low heat shrinkage rate at elevated temperatures, high seal strength, and excellent antifogging property similarly to the film of Example 1.

### Examples 5 and 6

The same raw materials as those used in Examples 1 to 4 were used as the raw materials for the base layer A and the sealant layer B, and propylene-ethylene-butene copolymer PP-6 was used as the raw material for the intermediate layer C.

First, the polypropylene-based resin compositions constituting base layer A/intermediate layer C/sealant layer B were respectively melt-kneaded in extruders at 250°C, 250°C and 210°C using a multilayer feed block. The molten polypropylene-based resin compositions were then coextruded through a T-die at 250°C while being laminated to form a multilayer molten sheet having a thickness of 1.8 mm, such that the thickness ratio of base layer A/intermediate layer C/sealant layer B was 13/2/1 respectively.

A molten sheet was produced and stretched in the machine direction and the width direction similarly to in Example 1. Immediately after the stretching in the width direction, the film was heat-treated at 170°C while being held by clips without relaxation. Thereafter, the film was heat-treated at 140°C and relaxed in the width direction at a relaxation ratio of 3%, followed by cooling to room temperature. The surface of the sealant layer B side of the resulting biaxially oriented polypropylene film was subjected to corona treatment, and the film was then wound up using a winder to obtain the biaxially oriented polypropylene film of the present invention. The resulting film had a total thickness of 16 µm. In the resulting film, the thicknesses of base layer A/intermediate layer C/sealant layer B were 13 µm/2 µm/1 µm, respectively.

The raw material compositions of the respective layers and the film-forming conditions are shown in Table 1, and various physical properties of the films are shown in Table 2.

The biaxially oriented polypropylene films of Examples 5 and 6 exhibited high rigidity while maintaining a low heat shrinkage rate at elevated temperatures, high seal strength, and excellent antifogging property.

### Example 7

The same raw materials as those used in Examples 1 to 4 were used for the base layer A, the sealant layer B and the functional layer D, and propylene-ethylene-butene copolymer PP-6 was used as the raw material for the intermediate layer C.

First, the polypropylene-based resin compositions constituting the functional layer D/base layer A/intermediate layer C/sealant layer B were melt-kneaded in extruders at 250°C, 250°C, 250°C and 210°C, respectively, using a multilayer feed block. The molten polypropylene-based resin compositions were then coextruded through a T-die at 250°C while being laminated to form a multilayer molten sheet having a thickness of 1.8 mm, such that the thickness ratio of functional layer D/base layer A/intermediate layer C/sealant layer B was 1/16/2/1.

A molten sheet was produced and stretched in the machine direction and the width direction similarly to Example 1. Immediately after the stretching in the width direction, the film was heat-treated at 170°C while being held by clips without relaxation. Thereafter, the film was heat-treated at 140°C and relaxed in the width direction at a relaxation ratio of 3%, followed by cooling to room temperature. The surface of the sealant layer B side of the resulting biaxially oriented polypropylene film was subjected to corona treatment, and the film was then wound up using a winder to obtain the biaxially oriented polypropylene film of the present invention. The resulting film had a thickness of 20 µm. In the resulting film, the thicknesses of functional layer D/base layer A/intermediate layer C/sealant layer B were 1 µm/16 µm/2 µm/1 µm, respectively.

The raw material compositions of the respective layers and the film-forming conditions are shown in Table 1, and various physical properties of the films are shown in Table 2.

The biaxially oriented polypropylene film of Example 7 exhibited high rigidity while maintaining a low heat shrinkage rate at elevated temperatures, high seal strength and excellent antifogging property.

### Comparative Examples 1 to 6

In Comparative Examples 1 to 6, the films having a layer configuration of functional layer D/base layer A/intermediate layer C/sealant layer B were produced using the same raw materials as in Example 7. Except for Comparative Example 3, the thickness configuration was the same as in Example 7, i.e., 1 µm/16 µm/2 µm/1 µm, with a total thickness of 20 µm. In Comparative Example 3, the thicknesses of the respective layers were 1 µm/31 µm/2 µm/1 µm, and the total thickness was 35 µm.

The film-forming conditions of Comparative Examples 1 to 6 are shown in Table 3, and various physical properties of the films are shown in Table 4.

### Comparative Examples 7

In Comparative Example 7, a film having the same layer configuration of functional layer D/base layer A/intermediate layer C/sealant layer B as in Example 7 was produced, and the thickness configuration was also the same as in Example 7, i.e., 1 µm/16 µm/2 µm/1 µm, with a total thickness of 20 µm. However, the raw material for the base layer A was a polypropylene-based resin composition comprising 43 mass% of propylene homopolymer PP-6 ("FY6H", manufactured by Japan Polypropylene Corporation; MFR: 1.9 g/10 min; melting point: 163°C; mesopentad fraction: 98.9%) and 57 mass% of PP-7, which is a composition obtained by adding 0.16 mass% of glycerol monostearate (TB-123, manufactured by Matsumoto Yushi-Seiyaku), 0.2 mass% of polyoxyethylene (2) stearylamine (TB-12, manufactured by Matsumoto Yushi-Seiyaku), and 0.6 mass% of polyoxyethylene (2) stearylamine monostearate (ELEX 334, manufactured by Matsumoto Yushi-Seiyaku) to 100 mass% of the above PP-1. The film-forming conditions are shown in Table 3, and various physical properties of the films are shown in Table 4.

**Table 1**

| | | Ex. 1 | Ex. 2 | Ex. 3 | Ex. 4 | Ex. 5 | Ex. 6 | Ex. 7 |
|---|---|---|---|---|---|---|---|---|
| Layer configuration | | D/A/B | D/A/B | D/A/B | D/A/B | A/C/B | A/C/B | D/A/C/B |
| Thickness of each layer | | 1/14/1µm | 1/14/1µm | 1/14/1µm | 1/14/1µm | 13/2/1µm | 13/2/1µm | 1/16/2/1µm |
| Functional layer D | PP-6 | 100% | 100% | 100% | 100% | - | - | 100% |
| | Melting point of composition | 138°C | 138°C | 138°C | 138°C | - | - | 138°C |
| Base layer A | PP-1 | 20% | 20% | 20% | 20% | 20% | 20% | 20% |
| | PP-2 | 20% | 20% | 20% | 20% | 20% | 20% | 20% |
| | PP-3 | 60% | 60% | 60% | 60% | 60% | 60% | 60% |
| | PP-4 | - | - | - | - | - | - | - |
| | PP-5 | - | - | - | - | - | - | - |
| | Antifogging agent | 1.17% | 1.17% | 1.17% | 1.17% | 1.17% | 1.17% | 1.17% |
| | Melting point of composition | 162.8°C | 162.8°C | 162.8°C | 162.8°C | 162.8°C | 162.8°C | 162.8°C |
| Intermediate layer C | PP-6 | - | - | - | - | 100% | 100% | 100% |
| | Melting point of composition | - | - | - | - | 138°C | 138°C | 138°C |
| Seal layer B | PP-7 | 100% | 100% | 100% | 100% | 100% | 100% | 100% |
| | Melting point of composition | 128°C | 128°C | 128°C | 128°C | 128°C | 128°C | 128°C |
| Antifogging agent/Total composition | | 1.05% | 1.05% | 1.05% | 1.05% | 1.01% | 0.95% | 1.00% |
| Extrusion temperature | Functional layer D | 250°C | 250°C | 250°C | 250°C | - | - | 250°C |
| | Base layer A | 250°C | 250°C | 250°C | 250°C | 250°C | 250°C | 250°C |
| | Intermediate layer C | - | - | - | - | 250°C | 250°C | 250°C |
| | Seal layer B | 210°C | 210°C | 210°C | 210°C | 210°C | 210°C | 210°C |
| Cooling roll temperature | | 20°C | 20°C | 20°C | 20°C | 20°C | 20°C | 20°C |
| Water bath temperature | | 20°C | 20°C | 20°C | 20°C | 20°C | 20°C | 20°C |
| Stretching step | Temperature | 142°C | 142°C | 147°C | 142°C | 142°C | 147°C | 142°C |
| Machine direction | Ratio | 4.5 | 4.5 | 4.5 | 4.5 | 4.5 | 4.5 | 4.5 |
| Preheating step | Temperature | 172°C | 172°C | 172°C | 170°C | 172°C | 170°C | 172°C |
| Stretching step | Temperature | 162°C | 162°C | 162°C | 164°C | 162°C | 162°C | 162°C |
| Width direction | Ratio | 12.7 | 13.5 | 13.7 | 13.7 | 12.7 | 14.3 | 12.7 |
| Early stage | Temperature | 170°C | 170°C | 170°C | 170°C | 170°C | 168°C | 170°C |
| Heat treatment step | Relaxation ratio | 0% | 0% | 0% | 0% | 0% | 0% | 0% |
| Late stage | Temperature | 140°C | 120°C | 140°C | 160°C | 140°C | 140°C | 140°C |
| Heat treatment step | Relaxation ratio | 3% | 3% | 3% | 3% | 3% | 3% | 3% |
| Cooling step | Temperature | 23°C | 23°C | 23°C | 23°C | 23°C | 23°C | 23°C |
| Corona treatment | Applied power | 1.8kW | 1.8kW | 1.8kW | 1.8kW | 1.8kW | 1.8kW | 1.8kW |

**Table 2**

| | | Comparative Ex. 1 | Comparative Ex. 2 | Comparative Ex. 3 | Comparative Ex. 4 | Comparative Ex. 5 | Comparative Ex. 6 | Comparative Ex. 7 |
|---|---|---|---|---|---|---|---|---|
| Layer configuration | | D/A/C/B | D/A/C/B | D/A/C/B | D/A/C/B | D/A/C/B | D/A/C/B | D/A/C/B |
| Thickness of each layer | | 1/16/2/1µm | 1/16/2/1µm | 1/31/2/1µm | 1/16/2/1µm | 1/16/2/1µm | 1/16/2/1µm | 1/16/2/1 |
| Functional layer D | PP-6 | 100% | 100% | 100% | 100% | 100% | 100% | 100% |
| | Melting point of composition | 138°C | 138°C | 138°C | 138°C | 138°C | 138°C | 138°C |
| Base layer A | PP-1 | 20% | 20% | 20% | 20% | 20% | 20% | - |
| | PP-2 | 20% | 20% | 20% | 20% | 20% | 20% | - |
| | PP-3 | 60% | 60% | 60% | 60% | 60% | 60% | - |
| | PP-4 | - | - | - | - | - | - | 43% |
| | PP-5 | - | - | - | - | - | - | 57% |
| | Antifogging agent | 1.17% | 0.40% | 0.40% | 0.40% | 0.40% | 0.40% | 0.55% |
| | Melting point of composition | 162.8°C | 162.8°C | 162.8°C | 162.8°C | 162.8°C | 162.8°C | 162.8°C |
| Intermediate layer C | PP-6 | 100% | 100% | 100% | 100% | 100% | 100% | 100% |
| | Melting point of composition | 138°C | 138°C | 138°C | 138°C | 138°C | 138°C | 138°C |
| Seal layer B | PP-7 | 100% | 100% | 100% | 100% | 100% | 100% | 100% |
| | Melting point of composition | 128°C | 128°C | 128°C | 128°C | 128°C | 128°C | 128°C |
| Antifogging agent/Total composition | | 1.00% | 1.00% | 1.00% | 1.00% | 1.00% | 1.00% | 0.96% |
| Extrusion temperature | Functional layer D | 250°C | 250°C | 250°C | 250°C | 250°C | 250°C | 250°C |
| | Base layer A | 250°C | 250°C | 280°C | 250°C | 250°C | 250°C | 250°C |
| | Intermediate layer C | 250°C | 250°C | 250°C | 250°C | 250°C | 250°C | 250°C |
| | Seal layer B | 210°C | 210°C | 250°C | 210°C | 210°C | 210°C | 210°C |
| Cooling roll temperature | | 20°C | 30°C | 30°C | 20°C | 20°C | 20°C | 20°C |
| Water bath temperature | | 20°C | - | - | 20°C | 20°C | 20°C | 20°C |
| Stretching step | Temperature | 142°C | 125°C | 130°C | 142°C | 142°C | 142°C | 138°C |
| Machine direction | Ratio | 4.5 | 4.5 | 4.5 | 4.5 | 4.5 | 4.5 | 4.5 |
| Preheating step | Temperature | 177°C | 175°C | 175°C | 170°C | 170°C | 170°C | 168°C |
| Stretching step | Temperature | 169°C | 160°C | 165°C | 164°C | 162°C | 162°C | 163°C |
| Width direction | Ratio | 6.8 | 8.2 | 9.5 | 13.4 | 13.3 | 13.7 | 13.0 |
| Early stage | Temperature | 170°C | 170°C | 165°C | 155°C | 165°C | 100°C | 170°C |
| Heat treatment step | Relaxation ratio | 16 | 6.7 | 6 | 3 | 0 | 0 | 6 |
| Late stage | Temperature | - | - | - | 140°C | 165°C | 165°C | - |
| Heat treatment step | Relaxation ratio | - | - | - | 3 | 3 | 3 | - |
| Cooling step | Temperature | 100°C | 23°C | 23°C | 23°C | 23°C | 100°C | 30°C |
| Corona treatment | Applied power | 1.8kW | 1.8kW | 1.8kW | 1.8kW | 1.8kW | 1.8kW | 1.8kW |

**Table 3**

| | | Ex. 1 | Ex. 2 | Ex. 3 | Ex. 4 | Ex. 5 | Ex. 6 | Ex. 7 |
|---|---|---|---|---|---|---|---|---|
| Thickness | | 16µm | 16µm | 16µm | 16µm | 16µm | 16µm | 20µm |
| Haze | | 3.3% | 2.0% | 1.9% | 1.9% | 3.9% | 2.2% | 4.0% |
| Image clarity | | 72% | 70% | 75% | 68% | 63% | 62% | 64% |
| Clarity | | 97% | 96% | 98% | 95% | 96% | 94% | 95% |
| (X₁-X₀) /X₀ | | 0.30% | 0.18% | 0.24% | 0.23% | 0.26% | 0.34% | 0.30% |
| (X₂-X₀) /X₀ | | 0.00% | 0.00% | 0.00% | 0.00% | 0.00% | 0.00% | 0.00% |
| Temperature at 0.5% shrinkage | | 140°C | 136°C | 139°C | 140°C | 148°C | 149°C | 153°C |
| Maximum value E" (A) of loss elastic modulus in -25°C to 25°C | | 0.50GPa | 0.49GPa | 0.42GPa | O.50GPa | 0.44GPa | 0.45GPa | 0.44GPa |
| Minimum value E" (B) of loss elastic modulus in 25°C to 75°C | | 0.24GPa | 0.23GPa | 0.19GPa | 0.24GPa | 0.20GPa | 0.21GPa | 0.19GPa |
| Maximum value E" (C) of loss elastic modulus in 100°C to 170°C | | 0.32GPa | 0.38GPa | 0.39GPa | 4.32GPa | 0.29GPa | 0.30GPa | 0.30GPa |
| E " (C)/E " (A) | | 0.65 | 0.78 | 0.70 | 0.65 | 0.66 | 0.67 | 0.68 |
| E " (B)/E " (C) | | 0.75 | 0.61 | 0.65 | 0.75 | 0.69 | 0.70 | 0.63 |
| Storage modulus at 23°C | Machine direction | 2.8GPa | 3.1GPa | 3.0GPa | 2.8GPa | 2.7GPa | 2.9GPa | 2.5GPa |
| | Width direction | 7.9GPa | 8.3GPa | 8.2GPa | 7.9GPa | 7.4GPa | 8.1GPa | 7.3GPa |
| Storage modulus at 120°C | Machine direction | 0.7GPa | 0.9GPa | 0.9GPa | 0.7GPa | 0.8GPa | 0.8GPa | 0.7GPa |
| | Width direction | 2.1GPa | 2.3GPa | 2.3GPa | 2.1GPa | 1.9GPa | 1.8GPa | 1.8GPa |
| Storage modulus at 140°C | Machine direction | 0.4GPa | 0.5GPa | 0.5GPa | 0.4GPa | 0.5GPa | 0.4GPa | 0.4GPa |
| | Width direction | 1.3GPa | 1.4GPa | 1.5GPa | 1.3GPa | 1.2GPa | 1.1GPa | 1.1GPa |
| Storage modulus at 150°C | Machine direction | 0.2GPa | 0.3GPa | 0.3GPa | 0.2GPa | 0.3GPa | 0.3GPa | 0.2GPa |
| | Width direction | 0.8GPa | 1.0GPa | 1.1GPa | 0.8GPa | 0.8GPa | 0.7GPa | 0.7GPa |
| Total storage modulus at 23°C+140°C | Machine direction | 3.2GPa | 3.6GPa | 5GPa | 3.2GPa | 3.2GPa | 3.3GPa | 2.9GPa |
| | Width direction | 9.2GPa | 9.8GPa | 9.7GPa | 9.2GPa | 8.6GPa | 9.2GPa | 8.4GPa |
| F5 at 23°C | Machine direction | 40MPa | 43MPa | 45MPa | 40MPa | 43MPa | 44MPa | 40MPa |
| | Width direction | 135MPa | 155MPa | 159MPa | 135MPa | 126MPa | 145MPa | 124MPa |
| Heat shrinkage rate at 120°C | Machine direction | 1.7% | 1.7% | 1.6% | 1.7% | 1.5% | 1.8% | 1.4% |
| | Width direction | 0.1% | 0.5% | 0.2% | 0.1% | 0.0% | 0.1% | -0.2% |
| | Total | 1.8% | *2.2%* | 1.8% | 1.8% | 1.5% | 1.9% | 1.2% |
| Heat shrinkage rate at 150°C | Machine direction | 4.9% | 4.3% | 3.8% | 4.9% | 4.3% | 4.8% | 4.8% |
| | Width direction | 8.0% | 7.4% | 7.0% | 4.2% | 5.1% | 5.5% | 3.5% |
| Heat-seal initiation tem. | Layer A or Layer D | 132°C | 126°C | 131°C | 128°C | Not measurable | Not measurable | 127°C |
| | Layer B | 116°C | 113°C | 116°C | 113°C | 115°C | 119°C | 114°C |
| Heat-seal strength at 130°C | Layer A or Layer D | 0.6 N/15mm | 0.9 N/15mm | 0.8 N/15mm | 1.0 N/15mm | 0.0 N/15mm | 0.0 N/15mm | 2.2 N/15mm |
| | Layer B | 2.8 N/15mm | 3.5 N/15mm | 3.4 N/15mm | 3.6 N/15mm | 5.1 N/15mm | 5.0 N/15mm | 5.1 N/15mm 2.6 |
| Heat-seal strength at 140°C | Layer A or Layer D | 2.8 N/15mm | 3.3 N/15mm | 2.6 N/15mm | 3.3 N/15mm | 0.1 N/15mm | 0.1 N/15mm | N/15mm |
| | Layer B | 3.6 N/15mm | 3.9 N/15mm | 3.8 N/15mm | 4.0 N/15mm | 5.9 N/15mm | 5.3 N/15mm | 6.5 N/15mm |
| Dynamic friction coefficient | Layer A or Layer D | 0.31 | 0.34 | 0.33 | 0.31 | 0.37 | 0.37 | 0.33 |
| | Layer B | 0.34 | D.35 | 0.35 | 0.35 | 0.41 | 0.43 | 0.42 |
| Wetting tension | Layer A or Layer D | 40 mN/m | 39 mN/m | 39 mN/m | 40 mN/m | 40 mN/m | 40 mN/m | 40 mN/m |
| | Layer B | 39 mN/m | 39 mN/m | 39 mN/m | 39 mN/m | 38 mN/m | 38 mN/m | 38 mN/m |
| Antifogging property | Layer A or Layer D | Grade 2 | Grade 3 | Grade 2 | Grade 2 | Grade 5 | Grade 5 | Grade 3 |
| | Layer B | Grade 1 | Grade 1 | Grade 1 | Grade 1 | Grade 1 | Grade 1 | Grade 1 |
| Appearance of heat seal | | A | A | A | A | A | A | A |
| Planarity after treatment at 130°C | | A | A | A | A | A | A | A |

**Table 4**

| | | Comparative Ex. 1 | Comparative Ex. 2 | Comparative Ex. 3 | Comparative Ex. 4 | Comparative Ex. 5 | Comparative Ex. 6 | Comparative Ex. 7 |
|---|---|---|---|---|---|---|---|---|
| Thickness | | 20µm | 20µm | 35µm | 20µm | 20µm | 20µm | 20µm |
| Haze | | 3.5% | 3.2% | 4.4% | 4.6% | 4.8% | 5.1% | 3.5% |
| Image clarity | | 61% | 53% | 49% | 60% | 62% | 62% | 63% |
| Clarity | | 95% | 87% | 86% | 93% | 94% | 95% | 95% |
| (X₁-X₀) /X₀ | | 1.79% | 0.81% | 0.15% | 0.09% | 0.25% | 0.01% | 0.74% |
| (X₂-X₀) /X₀ | | 0.00% | 0.00% | -1.12% | -1.42% | -0.80% | -1.73% | -0.87% |
| Temperature at 0.5% shrinkage | | 152°C | 143°C | 118°C | 115°C | 120°C | 106°C | 119°C |
| Maximum value E" (A) of loss elastic modulus in -25°C to 25°C | | 0.34GPa | 0.43GPa | 0.45GPa | 0.49GPa | 0.50GPa | 0.42GPa | 0.45GPa |
| Minimum value E" (B) of loss elastic modulus in 25°C to 75°C | | 0.15GPa | 0.14GPa | 0.13GPa | 0.14GPa | 0.14GPa | 0.15GPa | 0.12GPa |
| Maximum value E" (C) of loss elastic modulus in 100°C to 170°C | | 0.18GPa | 0.21GPa | 0.24GPa | 0.38GPa | 0.28GPa | 0.43GPa | 0.32GPa |
| E " (C)/E " (A) | | 0.53 | 0.49 | 0.53 | 0.78 | 0.56 | 1.02 | 0.72 |
| E " (B)/E" (C) | | 0.83 | 0.67 | 0.54 | 0.37 | 0.50 | 0.35 | *0.38* |
| Storage modulus at 23°C | Machine direction | 3.2GPa | 2.5GPa | 2.6GPa | 2.8GPa | 3.0GPa | 3. OGPa | 2.5GPa |
| | Width direction | 5.2GPa | 6.8GPa | 7.3GPa | 8.4GPa | 8.0GPa | 8.5GPa | 8.2GPa |
| Storage modulus at 120°C | Machine direction | 0.8GPa | 0.7GPa | 0.7GPa | 0.8GPa | 0.7GPa | 1.0GPa | 0.9GPa |
| | Width direction | 1.1GPa | 1.0GPa | 1.9GPa | 2.4GPa | 2.1GPa | 2.5GPa | 2.2GPa |
| Storage modulus at 140°C | Machine direction | 0.4GPa | 0.2GPa | 0.4GPa | 0.5GPa | 0.5GPa | 0.5GPa | 0.5GPa |
| | Width direction | 0.6GPa | 0.5GPa | 1.0GPa | 1.2GPa | 1.3GPa | 1.5GPa | 1.1GPa |
| Storage modulus at 150°C | Machine direction | 0.3GPa | 0.1GPa | 0.2GPa | 0.3GPa | 0.2GPa | 0.3GPa | 0.3GPa |
| | Width direction | 0.4GPa | 0.3GPa | 0.7GPa | 0.8GPa | 0.9GPa | 1.0GPa | 0.9GPa |
| Total storage modulus at 23°C+140°C | Machine direction | 3.6GPa | 2.7GPa | 2.8GPa | 3.3GPa | 3.5GPa | 3.5GPa | 3.0GPa |
| | Width direction | 5.8GPa | 7.3GPa | 8.3GPa | 9.6GPa | 9.3GPa | 10.0GPa | 9.3GPa |
| F5 at 23°C | Machine direction | 44MPa | 45MPa | 44MPa | 48MPa | 44MPa | 45MPa | 46MPa |
| | Width direction | 84MPa | 87MPa | 118MPa | 141MPa | 145MPa | 155MPa | 128MPa |
| Heat shrinkage rate at 120°C | Machine direction | 1.4% | 1.5% | 2.4% | 2.6% | 2.2% | 1.2% | 3.0% |
| | Width direction | -0.5% | -0.2% | 1.2% | 2.1% | 1.5% | 2.6% | 1.6% |
| | Total | 0.9% | 1.3% | 3.6% | 4.7% | 3.7% | 3.8% | 4.6% |
| Heat shrinkage rate at 150°C | Machine direction | 3.9% | 5.3% | 6.2% | 4.5% | 3.3% | 3.2% | 14.0% |
| | Width direction | 2.4% | 6.1% | 12.3% | 11.7% | 10.1% | 12.6% | 22.6% |
| Heat-seal initiation tem. | Layer A or Layer D | 135°C | 128°C | 130°C | 134°C | 126°C | 136°C | 129°C |
| | Layer B | 124°C | 115°C | 116°C | 118°C | 116°C | 125°C | 118°C |
| Heat-seal strength at 130°C | Layer A or Layer D | 0.3 N/15mm | 1.5 N/15mm | 1.2 N/15mm | 1.1 N/15mm | *1.3* N/15mm | 0.2 N/15mm | 0.6 N/15mm |
| | Layer B | 2.7 N/15mm | 4.5 N/15mm | 5.0 N/15mm | 4.6 N/15mm | 5.2 N/15mm | 2.6 N/15mm | 5.3 N/15mm |
| Heat-seal strength at 140°C | Layer A or Layer D | 2.8 N/15mm | 2.4 N/15mm | 2.4 N/15mm | 3.0 N/15mm | 2.8 N/15mm | 2.5 N/15mm | 2.9 N/15mm |
| | Layer B | 5.1 N/15mm | 6.0 N/15mm | 6.2 N/15mm | 5.9 N/15mm | 6.1 N/15mm | 5.2 N/15mm | 5.8 N/15mm |
| Dynamic friction coefficient | Layer A or Layer D | 0.34 | 0.33 | 0.34 | 0.36 | 0.33 | 0.35 | 0.36 |
| | Layer B | 0.43 | 0.32 | 0.31 | 0.45 | 0.42 | 0.41 | 0.31 |
| Wetting tension | Layer A or Layer D | 40 mN/m | 39 mN/m | 39 mN/m | 40 mN/m | 39 mN/m | 39 mN/m | 39 mN/m |
| | Layer B | 39 mN/m | 38 mN/m | 38 mN/m | 38 mN/m | 39 mN/m | 39 mN/m | 38 mN/m |
| Antifogging property | Layer A or Layer D | Grade 3 | Grade 3 | Grade 3 | Grade 3 | Grade 3 | Grade 3 | Grade 3 |
| | Layer B | Grade 1 | Grade 1 | Grade 1 | Grade 1 | Grade 1 | Grade 1 | Grade 1 |
| Appearance of heat seal | | C | C | C | C | C | C | C |
| Planarity after treatment at 130°C | | C | C | C | C | C | C | C |

As shown in Table 4, since at least one of the percentages (X₁ - X₀)/X₀ or (X₂ - X₀)/X₀ wherein X₀ is 10 mm, X₁ is the maximum value between chucks during temperature increase (mm), and X₂ is the minimum value between chucks during temperature increase (mm) was outside the prescribed range in Comparative Examples 1 to 7, the films of Comparative Examples 1 to 7 exhibited wrinkling in the sealed portion subjected to heat sealing at 150°C. In addition, the films showed poor flatness after being treated at 130°C.

In contrast, when the percentages of (X₁ - X₀)/X₀ and (X₂ - X₀)/X₀ were included within the predetermined values as shown in Table 3, the change in the film length, particularly in the width direction, was small even during the temperature increase process and after completion of the temperature increase. Accordingly, wrinkle formation was suppressed, and the film exhibited excellent flatness.

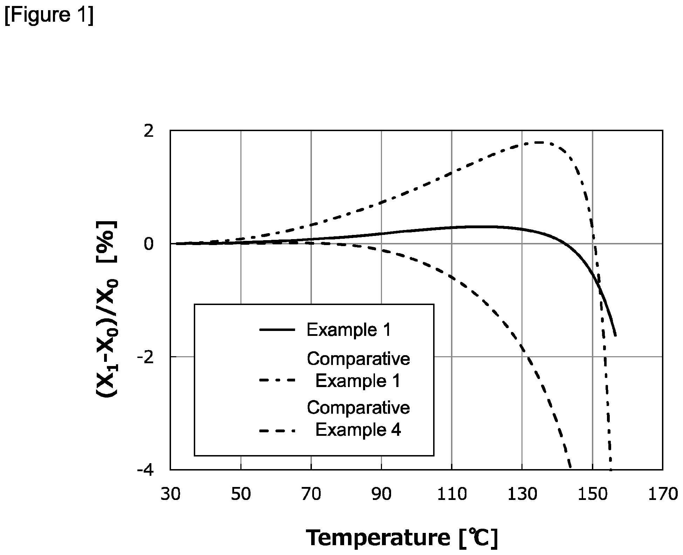

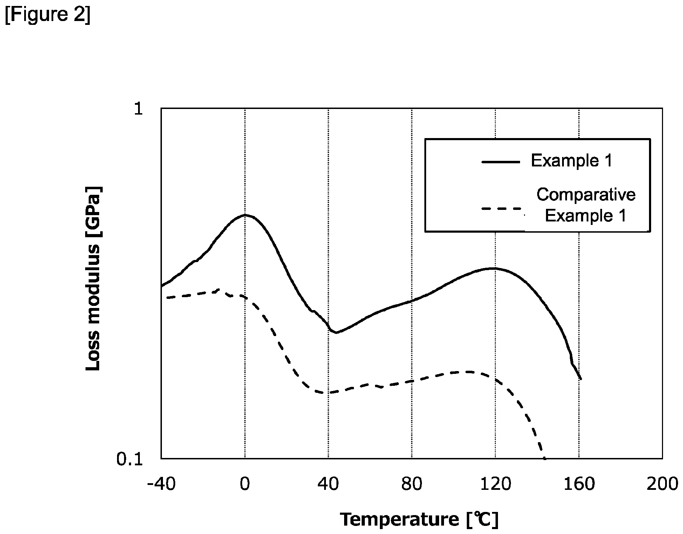

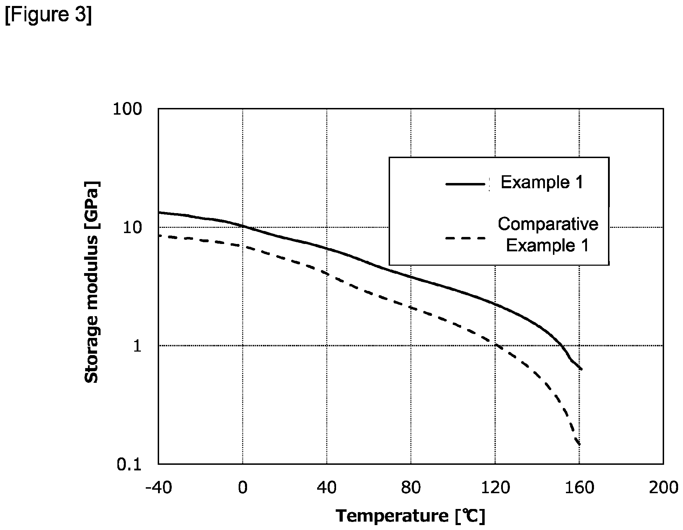

Figure 1 is a diagram showing the relationship between temperature and the length of the film in the width direction in Example 1, Comparative Example 1 and Comparative Example 4, and more precisely shows the relationship between temperature and the percentage of (X₁ - X₀)/X₀. Figure 2 is a diagram showing the relationship between temperature and loss modulus in Example 1 and Comparative Example 1, and Figure 3 is a diagram showing the relationship between temperature and storage modulus in Example 1 and Comparative Example 1.

### INDUSTRIAL APPLICABILITY

The biaxially oriented polypropylene film of the present invention has excellent rigidity and heat resistance, and therefore exhibits excellent bag-forming processability and readily maintains the shape of a bag when used as a packaging bag. Accordingly, the biaxially oriented polypropylene film of the present invention can be used for a packaging bag, and in particular, a packaging bag containing an antifogging agent is suitable for packaging fresh produce. In addition, the biaxially oriented polypropylene film of the present invention can be suitably used in applications requiring high rigidity even without laminating a sealant film. Further, since strength can be maintained even when the film thickness is reduced, the environmental burden can be reduced.

## Claims

1. A biaxially oriented polypropylene film,
comprising a base layer A composed of a polypropylene-based resin composition, and a sealant layer B composed of a polypropylene-based resin composition, and
satisfying the following (1) and (2):
(1) the biaxially oriented polypropylene film comprises the sealant layer B on at least one outermost surface thereof;
(2) the minimum value E"(B) of a loss modulus of the biaxially oriented polypropylene film within a temperature range of 25°C to 75°C is 0.16 GPa or more in dynamic viscoelasticity measurement.

2. The biaxially oriented polypropylene film according to claim 1, wherein when the biaxially oriented polypropylene film is heated from 30°C to 160°C at a heating rate of 10°C/min in thermomechanical analysis, the length in the width direction becomes 0.9950 × X₀ or less under the temperature of 129°C or higher, wherein X₀ is the length in the width direction at 30°C, the storage modulus in the machine direction at 23°C is 2.0 GPa or more, and the storage modulus in the width direction at 23°C is 7.0 GPa or more.

3. The biaxially oriented polypropylene film according to claim 1 or 2, wherein the sum of the storage modulus in the machine direction at 23°C and the storage modulus in the machine direction at 140°C is 2.8 GPa or more, and the sum of the storage modulus in the width direction at 23°C and the storage modulus in the width direction at 140°C is 8.5 GPa or more.

4. The biaxially oriented polypropylene film according to claim 1 or 2, wherein the storage modulus in the machine direction at 120°C is 0.5 GPa or more, and the storage modulus in the width direction at 120°C is 1.5 GPa or more.

5. The biaxially oriented polypropylene film according to claim 1 or 2, wherein the thermal shrinkage in the machine direction at 120°C is 2.5% or less, and the thermal shrinkage in the width direction at 120°C is 1.1% or less.

6. The biaxially oriented polypropylene film according to claim 1 or 2, wherein the stress at 5% elongation in the width direction at 23°C is 120 MPa or more.

7. The biaxially oriented polypropylene film according to claim 1 or 2, wherein Haze is 7.0% or less_{∘}

8. The biaxially oriented polypropylene film according to claim 1 or 2, comprising 0.2 mass% or more and 2.0 mass% or less of an antifogging agent.

9. The biaxially oriented polypropylene film according to claim 1 or 2, wherein the base layer A comprises 90 mass% or more of a polypropylene resin having the mesopentad fraction of 97.0% or more.

10. The biaxially oriented polypropylene film according to claim 1 or 2, wherein the sealant layer B comprises 70 mass% or more of a polypropylene copolymer, and the polypropylene copolymer comprises 4 mol% or more of an α-olefin other than propylene.

11. The biaxially oriented polypropylene film according to claim 1 or 2, comprising an intermediate layer C composed of a polypropylene-based resin composition between the base layer A and the sealant layer B, wherein the melting point of the polypropylene-based resin composition constituting the intermediate layer C is higher than that of the polypropylene-based resin composition constituting the sealant layer B.

12. The biaxially oriented polypropylene film according to claim 1 or 2, wherein the thickness is 10 µm or more and 100 µm or less.
